# EUROPEAN PATENT APPLICATION

(11) **EP 4 761 371 A1**
(43) Date of publication of application: **17.06.2026**
(21) Application number: 24858115.9
(22) Date of filing: 17.07.2024
(51) Int. Cl.: H04W 40/18

(54) **COMMUNICATION METHOD AND COMMUNICATION APPARATUS**

(30) Priority: 29.08.2023 CN 202311102266
(71) Applicant: HUAWEI TECHNOLOGIES CO., LTD., Shenzhen, Guangdong 518129 (CN)
(72) Inventor: CHENG, Wenjie, Shenzhen, Guangdong 518129 (CN); HU, Xingxing, Shenzhen, Guangdong 518129 (CN)
(74) Representative: Goddar, Heinz J.
(86) International application number: PCT/CN2024/105940
(87) International publication number: WO 2025/044571

(57) **Abstract**

This application provides a communication method. The method includes: receiving, within a service range of a first network device, a first reporting condition sent by the first network device, where the first reporting condition includes an identifier of the first network device and an identifier of a user equipment, and the first reporting condition indicates a condition for reporting user equipment history information UHI of the user equipment to the first network device; and sending feedback information of the user equipment, the identifier of the user equipment, and the identifier of the first network device to a second network device within a service range of the second network device, where the feedback information of the user equipment includes UHI that satisfies the first reporting condition. The technical solution of this application can implement a user equipment path feedback transmission mechanism across network devices.

## Description

This application claims priority to Chinese Patent Application No. 202311102266.2, filed with the China National Intellectual Property Administration on August 29, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With improvement of data storage and computing capabilities, artificial intelligence (artificial intelligence, AI) technologies are increasingly used. The 3rd generation partnership project (3rd generation partnership project, 3GPP) Release R17 approves a study item (study item, SI) proposing application of AI to new radio (new radio, NR), to improve network performance and user experience through intelligent data collection and analysis.

The existing protocols do not support a transmission mechanism for feedback information of a user equipment (user equipment, UE) across next generation-radio access network (next generation-radio access network, NG-RAN) nodes. For example, a next generation NodeB (next generation Nodeb, gNB) 1 may predict a path that a UE subsequently passes through a gNB 2 and a gNB 3, and the gNB 1 needs an actual UE moving path in the gNB 2 and the gNB 3 to optimize a local AI prediction model. However, the existing protocols can only support a source base station in receiving UE feedback information from a next-hop NG-RAN node, that is, only supports the gNB 1 in receiving UE feedback information from the gNB 2, but does not support the gNB 1 in receiving UE feedback information from the gNB 3. Therefore, a UE path feedback information transmission mechanism across the NG-RAN nodes needs to be introduced in the current standard.

### SUMMARY

This application provides a communication method and a communication apparatus, to implement a UE path feedback information transmission mechanism across NG-RAN nodes.

According to a first aspect, a communication method is provided, where the method includes: receiving, within a service range of a first network device, a first reporting condition sent by the first network device, where the first reporting condition includes an identifier of the first network device and an identifier of a user equipment, and the first reporting condition indicates a condition for reporting user equipment history information (UE history information, UHI) of the user equipment to the first network device; and sending feedback information of the user equipment, the identifier of the user equipment, and the identifier of the first network device to the second network device within a service range of a second network device, where the feedback information of the user equipment includes UHI that satisfies the first reporting condition.

In the technical solution provided in this application, the user equipment may receive the first reporting condition sent by the first network device, and actively send the feedback information of the user equipment, the identifier of the user equipment, and the identifier of the first network device to the second network device when the first reporting condition is satisfied. The second network device may forward the feedback information of the user equipment and the identifier of the user equipment to the first network device based on the identifier of the first network device, to implement a UE path feedback information transmission mechanism across network devices.

It should be understood that, the first network device has an AI prediction capability, and can predict a moving path of the UE in the second network device. At least one intermediate device may be included between the first network device and the second network device.

In some possible application scenarios, the user equipment history information (UE history information, UHI) may also be referred to as UE historical moving path information or UE historical path information. A specific name is not limited in this application.

In a possible implementation, the UE starts to monitor and record the UHI by default after receiving the first reporting condition. Each time the UE hands over to a new network device, the UE sends the feedback information of the user equipment, the identifier of the user equipment, and the identifier of the first network device to the network device. The network device sends the feedback information of the user equipment and the identifier of the user equipment to the first network device based on the identifier of the first network device. The first network device optimizes a local AI model based on the feedback information.

In a possible implementation, the UE starts to monitor and record the UHI by default after receiving the first reporting condition, and sends the feedback information to the second network device after a preset end condition is satisfied. The preset end condition may be any one or more of the following: a UHI inter-network device quantity, a quantity of cells recorded in the UHI, UHI recording duration, a last cell identity (identity document, ID), and a last network device ID.

In a possible implementation, the second network device may alternatively be a next-hop network device of the first network device.

With reference to the first aspect, in some implementations of the first aspect, the first reporting condition further includes any one or more of the following: a feedback start condition, a feedback termination condition, and an identifier of the first reporting condition, the feedback start condition indicates a start condition for recording the feedback information, and the feedback termination condition indicates a termination condition for recording the feedback information.

In a possible implementation, the third network device is the intermediate device between the first network device and the second network device. The third network device may predict path information of the UE in the second network device before the UE hands over to the second network device. In this case, it may be considered that the path information that is predicted by the third network device and that is of the UE in the second network device is more accurate than path information that is predicted by the first network device and that is of the UE in the second network device. The third network device may send failure indication information to the UE, where the failure indication information includes the identifier of the first reporting condition, which indicates the UE not to monitor UHI feedback reporting after receiving the failure indication information.

In a possible implementation, the first reporting condition includes the feedback start condition, and the UE uses a preset feedback termination condition. Optionally, the first reporting condition includes the feedback termination condition, and the UE uses a preset feedback start condition.

In the technical solution provided in this application, the feedback start condition and/or the feedback termination condition of the first reporting condition may be set. The UE actively sends the feedback information of the user equipment, the identifier of the user equipment, and the identifier of the first network device to the second network device when the first reporting condition is satisfied. The second network device may forward the feedback information of the user equipment and the identifier of the user equipment to the first network device based on the identifier of the first network device, to implement a UE path feedback information transmission mechanism across network devices.

With reference to the first aspect, in some implementations of the first aspect, the feedback start condition includes any one or more of the following: a cell identity and start recording time.

With reference to the first aspect, in some implementations of the first aspect, the feedback termination condition includes any one or more of the following: an inter-network device quantity, a quantity of recorded cells, recording duration, an identity of a last cell, and an identifier of a last network device.

It should be understood that the inter-network device quantity indicates that the UE reports feedback information of the UE to the second network device after recording to the inter-network device quantity from the feedback start condition; the quantity of recorded cells indicates that the UE reports the feedback information of the UE to the second network device after recording to the quantity of cells from the feedback start condition; the recording duration indicates that the UE reports the feedback information of the UE to the second network device after recording to the duration from the feedback start condition; the identifier of the last cell indicates that the UE reports the feedback information of the UE to the second network device after recording to the cell from the feedback start condition; and the identifier of the end network device indicates that the UE reports the feedback information of the UE to the second network device after recording to the network device from the feedback start condition.

In the technical solution provided in this application, the feedback start condition and/or the feedback termination condition of the first reporting condition may be set. The UE actively sends the feedback information of the user equipment, the identifier of the user equipment, and the identifier of the first network device to the second network device when the first reporting condition is satisfied. The second network device may forward the feedback information of the user equipment and the identifier of the user equipment to the first network device based on the identifier of the first network device, to implement a UE path feedback information transmission mechanism across network devices.

With reference to the first aspect, in some implementations of the first aspect, the sending the feedback information of the user equipment, the identifier of the user equipment, and the identifier of the first network device to the second network device includes: sending first UHI and a second reporting condition to the second network device, where the first UHI includes the UHI recorded by the user equipment, the second reporting condition includes the identifier of the user equipment and the identifier of the first network device, the second reporting condition indicates a condition for reporting the UHI of the user equipment to the first network device, and the first UHI is used to obtain the feedback information through filtering based on the second reporting condition.

It should be understood that, the second reporting condition may be the same as the first reporting condition, or the second reporting condition may be a subset of the first reporting condition. For example, the first reporting condition includes the identifier of the user equipment, the identifier of the first network device, the feedback start condition, the feedback termination condition, and the identifier of the first reporting condition, and the second reporting condition includes the identifier of the user equipment and the identifier of the first network device.

The second network device may receive the first UHI and the second reporting condition that are sent by the user equipment, obtain the feedback information from the first UHI through filtering based on the second reporting condition, and forward the feedback information to the first network device.

In the technical solution provided in this application, the user equipment may send the first UHI and the second reporting condition to the second network device, and the second network device may obtain the feedback information from the first UHI through filtering based on the second reporting condition, and then forward the feedback information to the first network device, to implement a UE path feedback information transmission mechanism across network devices.

With reference to the first aspect, in some implementations of the first aspect, the method further includes: receiving first path prediction information sent by the first network device, where the first path prediction information includes predicted path information of the user equipment in at least one network device.

In a possible implementation, the first network device may send the first path prediction information to the UE, where the first reporting condition does not include the feedback termination condition, and it is considered by default that the feedback termination condition is satisfied after the UE records to actual UE path information corresponding to the first path prediction information.

In the technical solution provided in this application, the user equipment may feed back actual path information corresponding to the path information predicted by the first network device, to optimize an AI model of the first network device.

With reference to the first aspect, in some implementations of the first aspect, the feedback information is used to optimize the artificial intelligence AI model of the first network device.

According to a second aspect, a communication method is provided, where the method includes: sending a first reporting condition to a user equipment, where the first reporting condition includes an identifier of a first network device and an identifier of the user equipment, and the first reporting condition indicates a condition for reporting UHI of the user equipment to the first network device; and receiving feedback information of the user equipment and the identifier of the user equipment that are sent by a second network device, where the feedback information of the user equipment includes UHI that satisfies the first reporting condition.

In the technical solution provided in this application, the first network device may send the first reporting condition to the user equipment. The UE actively sends the feedback information of the user equipment, the identifier of the user equipment, and the identifier of the first network device to the second network device when the first reporting condition is satisfied. The second network device may forward the feedback information of the user equipment and the identifier of the user equipment to the first network device based on the identifier of the first network device, to implement a UE path feedback information transmission mechanism across network devices.

If there is an XN interface between the first network device and the second network device, the second network device may directly send the feedback information of the UE and the identifier of the user equipment to the first network device. XN is a point-to-point interface between two NG-RAN nodes. If there is no XN interface between the first network device and the second network device, the second network device may forward the feedback information of the UE and the identifier of the user equipment to the first network device through a core network device.

With reference to the second aspect, in some implementations of the second aspect, the method further includes: optimizing an AI model of the first network device based on the feedback information of the user equipment and the identifier of the user equipment.

With reference to the second aspect, in some implementations of the second aspect, the method further includes: sending second path prediction information of the user equipment to the second network device, where the second path prediction information includes predicted path information of the user equipment in the second network device.

Optionally, the first network device may directly send the second path prediction information to the second network device, or may send the second path prediction information to the second network device through forwarding by another network device.

In the technical solution provided in this application, the first network device may send the path information that is obtained through prediction and that is of the UE in the second network device to the second network device, to optimize a handover resource of the UE.

With reference to the second aspect, in some implementations of the second aspect, the receiving the feedback information of the user equipment and the identifier of the user equipment that are sent by the second network device includes: receiving the feedback information of the user equipment and the identifier of the user equipment that have been sent by the second network device and forwarded by a core network device.

With reference to the second aspect, in some implementations of the second aspect, the method further includes: receiving an identifier of the second network device that has been sent by the second network device and that is forwarded by the core network device.

If there is no XN interface between the first network device and the second network device, the second network device may forward the feedback information of the UE and the identifier of the user equipment to the first network device through the core network device. Optionally, the second network device may further forward the identifier of the second network device, to indicate, to the first network device, a network device that sends the feedback information.

With reference to the second aspect, in some implementations of the second aspect, the first reporting condition further includes any one or more of the following: a feedback start condition, a feedback termination condition, and an identifier of the first reporting condition, the feedback start condition indicates a start condition for recording the feedback information, and the feedback termination condition indicates a termination condition for recording the feedback information.

With reference to the second aspect, in some implementations of the second aspect, the feedback start condition includes any one or more of the following: a cell identity and start recording time.

With reference to the second aspect, in some implementations of the second aspect, the feedback termination condition includes any one or more of the following: an inter-network device quantity, a quantity of recorded cells, recording duration, an identity of a last cell, and an identifier of a last network device.

With reference to the second aspect, in some implementations of the second aspect, the method further includes: sending first path prediction information of the user equipment to the user equipment, where the first path prediction information includes predicted path information of the user equipment in at least one network device.

Beneficial effects of any one of the second aspect and the possible implementations of the second aspect correspond to beneficial effects of any one of the first aspect and the possible implementations of the first aspect. Details are not described again.

According to a third aspect, a communication method is provided, where the method includes: receiving feedback information of a user equipment, an identifier of the user equipment, and an identifier of a first network device that are sent by the user equipment, where the feedback information of the user equipment includes UHI that satisfies a first reporting condition, and the first reporting condition indicates a condition for reporting the UHI to the first network device; and sending the feedback information and the identifier of the user equipment to the first network device.

In the technical solution provided in this application, the user equipment may receive the first reporting condition sent by the first network device, and actively send the feedback information of the user equipment, the identifier of the user equipment, and the identifier of the first network device to the second network device when the first reporting condition is satisfied. The second network device may forward the feedback information of the user equipment and the identifier of the user equipment to the first network device based on the identifier of the first network device, to implement a UE path feedback information transmission mechanism across network devices.

With reference to the third aspect, in some implementations of the third aspect, the receiving the feedback information of the user equipment, the identifier of the user equipment, and the identifier of the first network device that are sent by the user equipment includes: receiving first UHI and a second reporting condition that are sent by the user equipment, where the first UHI includes the UHI recorded by the user equipment, the second reporting condition includes the identifier of the user equipment and the identifier of the first network device, the second reporting condition indicates a condition for reporting the UHI of the user equipment to the first network device, and the first UHI is used to obtain the feedback information through filtering based on the second reporting condition.

With reference to the third aspect, in some implementations of the third aspect, the second reporting condition further includes any one or more of the following: a feedback start condition and a feedback termination condition, the feedback start condition indicates a start condition for recording the feedback information, and the feedback termination condition indicates a termination condition for recording the feedback information.

With reference to the third aspect, in some implementations of the third aspect, the feedback start condition includes any one or more of the following: a cell identity and start recording time.

With reference to the third aspect, in some implementations of the third aspect, the feedback termination condition includes any one or more of the following: an inter-network device quantity, a quantity of recorded cells, recording duration, an identity of a last cell, and an identifier of a last network device.

With reference to the third aspect, in some implementations of the third aspect, the sending the feedback information and the identifier of the user equipment to the first network device includes: sending the feedback information and the identifier of the user equipment to a core network device, where the core network device is configured to forward the feedback information and the identifier of the user equipment to the first network device.

With reference to the third aspect, in some implementations of the third aspect, the method further includes: sending an identifier of the second network device to the core network device, where the core network device is configured to forward the identifier of the second network device to the first network device.

With reference to the third aspect, in some implementations of the third aspect, the method further includes: receiving second path prediction information sent by the first network device, where the second path prediction information includes predicted path information of the user equipment in the second network device.

Beneficial effects of any one of the third aspect and the possible implementations of the third aspect correspond to beneficial effects of any one of the first aspect and the possible implementations of the first aspect. Details are not described again.

According to a fourth aspect, a communication method is provided, where the method includes: receiving a first reporting condition sent by a first network device, where the first reporting condition includes an identifier of the first network device and an identifier of a user equipment, and the first reporting condition indicates a condition for reporting UHI of the user equipment to the first network device; and sending feedback information of the user equipment and the identifier of the user equipment to the first network device, where the feedback information of the user equipment includes UHI that satisfies the first reporting condition.

In the technical solution provided in this application, the second network device may receive the first reporting condition sent by the first network device, and actively send the feedback information of the user equipment and the identifier of the user equipment to the first network device when the first reporting condition is satisfied, to implement a UE path feedback information transmission mechanism across network devices.

It should be understood that, the second network device may directly receive the first reporting condition sent by the first network device, and may further receive the first reporting condition that is forwarded by another network device and that is sent by the first network device.

It should be understood that, the first network device has an AI prediction capability, and can predict a moving path of the UE in the second network device. At least one intermediate device may be included between the first network device and the second network device.

In some possible application scenarios, the user equipment history information (UE history information, UHI) may also be referred to as UE moving path information or UE path information. A specific name is not limited in this application.

In a possible implementation, it is considered by default that a UHI feedback start condition is satisfied when the UE hands over to the second network device.

In a possible implementation, the second network device sends the feedback information to the first network device after the UHI reaches a preset end condition. The preset end condition may be any one or more of the following: a UHI inter-network device quantity, a quantity of cells recorded in the UHI, UHI recording duration, a last cell ID, and a last network device ID.

With reference to the fourth aspect, in some implementations of the fourth aspect, the first reporting condition further includes any one or more of the following: a feedback start condition and a feedback termination condition, the feedback start condition indicates a start condition for recording the feedback information, and the feedback termination condition indicates a termination condition for recording the feedback information.

In a possible implementation, the first reporting condition includes the feedback start condition, and the second network device uses a preset feedback termination condition. Optionally, the first reporting condition includes the feedback termination condition, and the second network device uses a preset feedback start condition.

In the technical solution provided in this application, the feedback start condition and/or the feedback termination condition of the first reporting condition may be set. The second network device sends the feedback information of the user equipment and the identifier of the user equipment to the first network device when the first reporting condition is satisfied, to implement a UE path feedback information transmission mechanism across network devices.

With reference to the fourth aspect, in some implementations of the fourth aspect, the feedback start condition includes any one or more of the following: a cell identity and start recording time.

With reference to the fourth aspect, in some implementations of the fourth aspect, the feedback termination condition includes any one or more of the following: an inter-network device quantity, a quantity of recorded cells, recording duration, an identity of a last cell, and an identifier of a last network device.

It should be understood that, the inter-network device quantity indicates that a UE path starting from the feedback start condition to the UE or the network device recording to the quantity of network devices is used as the feedback information; the quantity of cells indicates that a UE path starting from the feedback start condition to the UE or the network device recording to the quantity of cells is used as the feedback information; the recording duration indicates that a UE path starting from the feedback start condition to the UE or the network device recording to the duration is used as the feedback information; the ID of the last cell indicates that a UE path starting from the feedback start condition to the UE or the network device recording to the cell is used as the feedback information; and the ID of the end network device indicates that a UE path starting from the feedback start condition to the UE or the network device recording to the end network device is used as the feedback information.

In the technical solution provided in this application, the feedback start condition and/or the feedback termination condition of the first reporting condition may be set. The second network device sends the feedback information of the user equipment and the identifier of the user equipment to the first network device when the first reporting condition is satisfied, to implement a UE path feedback information transmission mechanism across network devices.

With reference to the fourth aspect, in some implementations of the fourth aspect, before the sending the feedback information of the user equipment and the identifier of the user equipment to the first network device, the method further includes: receiving first UHI, where the first UHI includes the UHI recorded by the user equipment; and obtaining the feedback information from the first UHI through filtering based on the first reporting condition.

In the technical solution provided in this application, the feedback information sent by the second network device to the first network device may be the feedback information obtained by the second network device from the first UHI through filtering based on the first reporting condition, to implement a UE path feedback information transmission mechanism across network devices.

With reference to the fourth aspect, in some implementations of the fourth aspect, before the sending the feedback information of the user equipment and the identifier of the user equipment to the first network device, the method further includes: receiving second UHI, where the second UHI includes UHI recorded by at least one network device; and obtaining the feedback information from third UHI through filtering and the second UHI based on the first reporting condition, where the third UHI is UHI recorded by the second network device.

For example, the first network device is a network device 1, and the second network device is a network device N, where N is an integer greater than 2. N-2 intermediate devices are included between the network device 1 and the network device N. N network devices separately store historical moving path information of the UE in the network device, and an n^{th} network device in the N network devices may send, to a next-hop network device, locally stored UHI and UHI received from a previous network device. For example, the network device 2 sends locally stored UHI 2 to a network device 3, and the network device 3 sends locally stored UHI 3 and the UHI 2 sent by the network device 2 to a network device 4.

In the technical solution provided in this application, the feedback information sent by the second network device to the first network device may be the feedback information obtained by the second network device from the third UHI and the second UHI through filtering based on the first reporting condition, to implement a UE path feedback information transmission mechanism across network devices.

With reference to the fourth aspect, in some implementations of the fourth aspect, the sending the feedback information of the user equipment and the identifier of the user equipment to the first network device includes: sending the feedback information and the identifier of the user equipment to a core network device, where the core network device is configured to forward the feedback information and the identifier of the user equipment to the first network device.

If there is an XN interface between the first network device and the second network device, the second network device may directly send the feedback information and the identifier of the user equipment to the first network device. XN is a point-to-point interface between two NG-RAN nodes. If there is no XN interface between the first network device and the second network device, the second network device may forward the feedback information and the identifier of the user equipment to the first network device through a core network device.

With reference to the fourth aspect, in some implementations of the fourth aspect, the method further includes: sending an identifier of the second network device to the core network device, where the core network device is configured to forward the identifier of the second network device to the first network device.

If there is no XN interface between the first network device and the second network device, the second network device may forward the feedback information and the identifier of the user equipment to the first network device through the core network device. Optionally, the second network device may further forward the identifier of the second network device, to indicate, to the first network device, a network device that sends the feedback information.

With reference to the fourth aspect, in some implementations of the fourth aspect, the method further includes: receiving second path prediction information sent by the first network device, where the second path prediction information includes predicted path information of the user equipment in the second network device.

In the technical solution provided in this application, the first network device may send the path information that is obtained through prediction and that is of the UE in the second network device to the second network device, to optimize a handover resource of the UE.

According to a fifth aspect, a communication method is provided, where the method includes: sending a first reporting condition to a second network device, where the first reporting condition includes an identifier of a first network device and an identifier of a user equipment, and the first reporting condition indicates a condition for reporting UHI of the user equipment to the first network device; and receiving feedback information of the user equipment and the identifier of the user equipment that are sent by the second network device, where the feedback information of the user equipment includes UHI that satisfies the first reporting condition.

In the technical solution provided in this application, the first network device may send the first reporting condition to the second network device, and the second network device actively sends the feedback information of the user equipment and the identifier of the user equipment to the first network device when the first reporting condition is satisfied, to implement a UE path feedback information transmission mechanism across network devices.

With reference to the fifth aspect, in some implementations of the fifth aspect, the method further includes: optimizing an artificial intelligence AI model of the first network device based on the feedback information of the user equipment and the identifier of the user equipment.

With reference to the fifth aspect, in some implementations of the fifth aspect, the method further includes: sending second path prediction information of the user equipment to the second network device, where the second path prediction information includes predicted path information of the user equipment in the second network device.

With reference to the fifth aspect, in some implementations of the fifth aspect, the receiving the feedback information of the user equipment and the identifier of the user equipment that are sent by the second network device includes: receiving the feedback information of the user equipment and the identifier of the user equipment that have been sent by the second network device and forwarded by a core network device.

With reference to the fifth aspect, in some implementations of the fifth aspect, the method further includes: receiving an identifier of the second network device that has been sent by the second network device and that is forwarded by the core network device.

With reference to the fifth aspect, in some implementations of the fifth aspect, the first reporting condition further includes any one or more of the following: a feedback start condition and a feedback termination condition, the feedback start condition indicates a start condition for recording the feedback information, and the feedback termination condition indicates a termination condition for recording the feedback information.

With reference to the fifth aspect, in some implementations of the fifth aspect, the feedback start condition includes any one or more of the following: a cell identity and start recording time.

With reference to the fifth aspect, in some implementations of the fifth aspect, the feedback termination condition includes any one or more of the following: an inter-network device quantity, a quantity of recorded cells, recording duration, an identity of a last cell, and an identifier of a last network device.

Beneficial effects of any one of the fifth aspect and the possible implementations of the fifth aspect correspond to beneficial effects of any one of the fourth aspect and the possible implementations of the fourth aspect. Details are not described again.

According to a sixth aspect, a communication apparatus is provided, including each module or unit configured to perform the method in any one of the first aspect or the possible implementations of the first aspect, or including each module or unit configured to perform the method in any one of the second aspect or the possible implementations of the second aspect, or including each module or unit configured to perform the method in any one of the third aspect or the possible implementations of the third aspect.

According to a seventh aspect, a communication apparatus is provided, including a processor. The processor is coupled to a memory, and may be configured to execute instructions in the memory, to implement the method in any one of the first aspect or the possible implementations of the first aspect, or implement the method in any one of the second aspect or the possible implementations of the second aspect, or implement the method in any one of the third aspect or the possible implementations of the third aspect. Optionally, the communication apparatus further includes the memory. Optionally, the communication apparatus further includes a communication interface. The processor is coupled to the communication interface, and controls the communication interface to implement communication with another device.

In an implementation, the communication apparatus is a user equipment. When the communication apparatus is the user equipment, the communication interface may be a transceiver or an input/output interface.

In another implementation, the communication apparatus is a chip configured in a user equipment. When the communication apparatus is the chip disposed in the user equipment, the communication interface may be an input/output interface.

In an implementation, the communication apparatus is a network device. When the communication apparatus is the network device, the communication interface may be a transceiver or an input/output interface.

In another implementation, the communication apparatus is a chip configured in the network device. When the communication apparatus is the chip configured in the network device, the communication interface may be an input/output interface.

Optionally, the transceiver may alternatively be a transceiver circuit. Optionally, the input/output interface may be an input/output circuit.

According to an eighth aspect, a communication apparatus is provided, including each module or unit configured to perform the method in any one of the fourth aspect or the possible implementations of the fourth aspect, or including each module or unit configured to perform the method in any one of the fifth aspect or the possible implementations of the fifth aspect.

According to a ninth aspect, a communication apparatus is provided, including a processor. The processor is coupled to a memory, and may be configured to execute instructions in the memory, to implement the method in the fourth aspect or any possible implementation of the fourth aspect, or implement the method in the fifth aspect or any possible implementation of the fifth aspect. Optionally, the communication apparatus further includes the memory. Optionally, the communication apparatus further includes a communication interface. The processor is coupled to the communication interface, and controls the communication interface to implement communication with another device.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the network device, the communication interface may be an input/output interface.

Optionally, the transceiver may alternatively be a transceiver circuit. Optionally, the input/output interface may be an input/output circuit.

According to a tenth aspect, a communication system is provided, including a user equipment, a first network device, and a second network device, where the user equipment performs the method according to any one of the first aspect and the possible implementations of the first aspect, the first network device performs the method according to any one of the second aspect and the possible implementations of the second aspect, and the second network device performs the method according to any one of the third aspect and the possible implementations of the third aspect.

According to an eleventh aspect, a communication system is provided, including a user equipment, a first network device, and a second network device, where the second network device performs the method according to any one of the fourth aspect and the possible implementations of the fourth aspect, and the first network device performs the method according to any one of the fifth aspect and the possible implementations of the fifth aspect.

According to a twelfth aspect, a processor is provided, including an input circuit, an output circuit, and a processing circuit. The processing circuit is configured to: receive a signal through the input circuit, and send a signal through the output circuit, to enable the processor to perform the method according to any one of the first aspect to the fifth aspect and the possible implementations of the first aspect to the fifth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a thirteenth aspect, a processing apparatus is provided, including a processor and a memory. The processor is configured to read instructions stored in the memory, and may receive a signal through a receiver, and transmit a signal through a transmitter, to perform the method according to any one of the first aspect to the fifth aspect and the possible implementations of the first aspect to the fifth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus according to the thirteenth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may exist independently outside the processor.

According to a fourteenth aspect, a computer-readable storage medium is provided, and stores a computer program or instructions. The computer program or the instructions are used to implement the method according to any one of the first aspect to the fifth aspect and the possible implementations of the first aspect to the fifth aspect.

According to a fifteenth aspect, a computer program product is provided. When the computer program product is run on a computer, the computer is enabled to perform the method according to any one of the first aspect to the fifth aspect and the possible implementations of the first aspect to the fifth aspect.

### BRIEF DESCRIPTION OF DRAWINGS

FIG. 1 is a diagram of a CU-DU architecture according to this application;
FIG. 2 is a diagram of a framework of application of an AI technology in NR according to this application;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a block diagram of a communication apparatus according to an embodiment of this application; and
FIG. 9 is a block diagram of a communication device according to an embodiment of this application.

### DESCRIPTION OF EMBODIMENTS

The following describes technical solutions of embodiments of this application with reference to accompanying drawings. Clearly, the described embodiments are some but not all of embodiments of this application. All other embodiments obtained by a person of ordinary skill in the art based on embodiments of this application without creative efforts shall fall within the protection scope of this application.

In embodiments of this application, the term "example", "for example", or the like is used to give an example, an illustration, or a description. Any embodiment or design scheme described as an "example" in this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one item of a, b, or c may indicate: a, b, c, a and b, a and c, b and c, or a, b, and c, where a, b, and c may be singular or plural.

The technical solutions provided in embodiments of this application may be applied to various communication systems, for example, a 4th generation (4th generation, 4G), 5th generation (5th generation, 5G), or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine to machine, M2M) communication, machine-type communication (machine-type communication, MTC), an internet of things (internet of things, IoT) communication system, another communication system, or a scenario in which an AI application is involved in a future mobile communication system.

The foregoing communication systems applicable to this application are merely an example for description, and the communication systems applicable to this application are not limited thereto. This is uniformly described herein, and details are not described below again. For ease of understanding of the technical solutions of this application, the following briefly describes related concepts or related technologies in this application.

A terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a device that provides voice/data connectivity for a user, for example, a hand-held device or a vehicle-mounted device with a wireless connection function. Currently, some examples of the terminal may be: a mobile phone (mobile phone), a tablet computer (pad), a computer with a wireless transceiver function (such as a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a SIP phone, a wireless local loop (wireless local loop, WLL) station, a palmtop computer (personal digital assistant, PDA), a hand-held device with a wireless communication function, a computing device or another processing device connected to a wireless modem, a wearable device, a terminal device in a 5G network, or a terminal device in a public land mobile network (public land mobile network, PLMN).

In addition, the terminal device may alternatively be a terminal device in an internet of things (internet of things, IoT) system. IoT is an important part of future development of information technologies, and its main technical feature is connecting objects to the internet by using a communication technology, to implement an intelligent network for human-machine interconnection and object-to-object interconnection. The IoT technology may implement massive connections, in-depth coverage, and power saving for terminals by using, for example, a narrowband (narrowband, NB) technology. In addition, the terminal device may further include a sensor, for example, an intelligent printer, a train detector, or a gas station, and its main functions include collecting data (some terminal devices), receiving control information and downlink data from a network device, sending an electromagnetic wave, and transmitting uplink data to the network device. It should be understood that the terminal device may be any device that can access a network. The terminal device and an access network device may communicate with each other by using a specific air interface technology.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be the terminal device, or may be an apparatus that can support the terminal device in implementing the function, such as a chip system, where the apparatus may be installed in the terminal device or used in matching with the terminal device. In embodiments of this application, the chip system may include a chip, or may include a chip and another discrete component. In embodiments of this application, an example in which the apparatus configured to implement the function of the terminal device is the terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any one of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission point (transmission and reception point, TRP), a transmission point (transmission point, TP), a primary station, a secondary station, a multi-standard radio (motor slide radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, relative to the CPRI, some downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation, and for uplink, one or more of digital beamforming (beamforming, BF) or fast Fourier transform (fast Fourier transform, FFT)/cyclic prefix (cyclic prefix, CP) removing are moved from the DU to the RU for implementation. In a possible implementation, the interface may be an enhanced common public radio interface (enhanced common public radio interface, eCPRI). In an eCPRI architecture, different manners of splitting the DU and the RU correspond to different categories (categories, Cats) of eCPRIs, for example, eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of RE mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions (for example, one or more of digital BF or fast Fourier transform (fast Fourier transform, FFT)/CP removal) after the demapping are moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be mounted in the network device or used together with the network device. In embodiments of this application, an example in which the apparatus configured to implement the function of the network device is a network device is merely used for description, and constitutes no limitation on the solutions in embodiments of this application.

The network device and/or the terminal device may be deployed on the land, including an indoor device, an outdoor device, a hand-held device, or a vehicle-mounted device; may be deployed on the water; or may be deployed on an airplane, a balloon, and a satellite in the air. Scenarios in which the network device and the terminal device are located are not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

The network device may be a central unit (central unit, CU) or a distributed unit (distributed unit, DU), or the network device may include a CU and a DU. It may be understood that the base station is divided into the CU and the DU from a perspective of a logical function. The CU and the DU may be physically separated, or may be physically deployed together. This is not specifically limited in embodiments of this application.

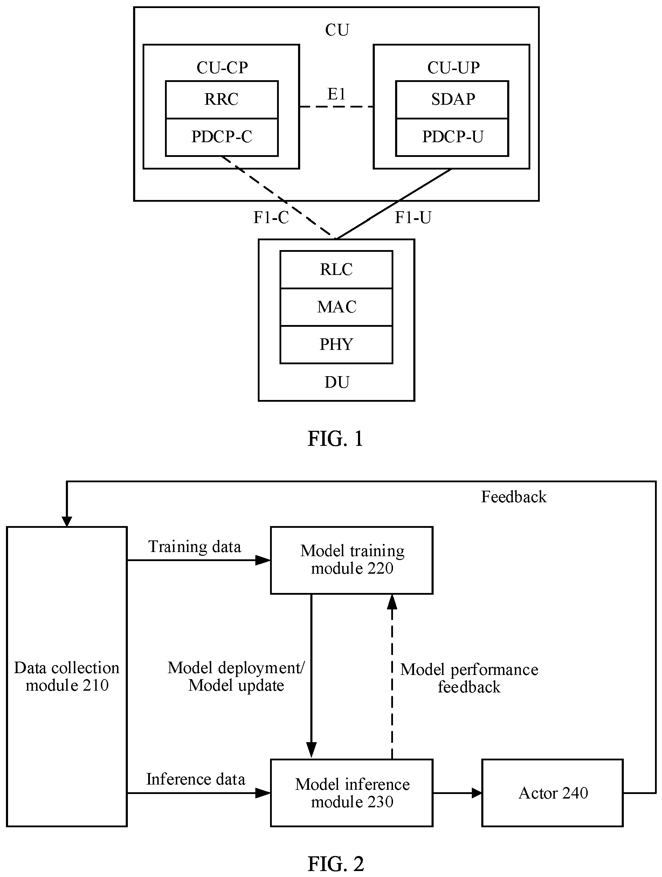

FIG. 1 is a diagram of a CU-DU architecture according to this application.

One CU may be connected to one DU, or a plurality of DUs may share one CU, which can save costs and facilitate network expansion. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and the remaining radio link control (radio link control, RLC) layer, medium access control (medium access control, MAC) layer, and physical layer are deployed on the DU. The CU and the DU are connected through an F1 interface. The CU indicates that a gNB is connected to a core network through an Ng interface. In this application, the foregoing protocol stack splitting manner is not completely limited, and there may be another splitting manner. For details, refer to TR 38.801.

The network device in embodiments of this application may be a central unit-control plane (central unit-control plane, CU-CP) node or a central unit-user plane (central unit-user plane, CU-UP) node, or the network device may be a CU-CP and a CU-UP. The CU-CP is responsible for functions of a control plane, and mainly includes an RRC and a PDCP-C. The PDCP-C is mainly responsible for data encryption and decryption, integrity protection, data transmission, and the like on the control plane. The CU-UP is responsible for a user plane function, and mainly includes an SDAP and PDCP-U. The SDAP is mainly responsible for processing data of a core network and mapping a data flow (flow) to a bearer. The PDCP-U is mainly responsible for data plane encryption and decryption, integrity protection, header compression, sequence number maintenance, data transmission, and the like. The CU-CP and the CU-UP are connected through an E1 interface. The CU-CP indicates that the gNB is connected to the core network through the Ng interface, and is connected to the DU through an F1-C (control plane) interface. The CU-UP is connected to the DU through an F1-U (user plane). In another possible implementation, the PDCP-C is also in the CU-UP.

The network device in embodiments of this application may be a device including the CU or the DU, a device including the CU and the DU, or a device including the CU-control plane node (CU-CP node), the CU-user plane node (CU-UP node), and the DU node.

Embodiments of this application are applicable to downlink signal transmission, uplink signal transmission, or device-to-device (device-to-device, D2D) signal transmission. For the downlink signal transmission, a sending device is a network device, and a corresponding receiving device is a terminal device. For the uplink signal transmission, a sending device is a terminal device, and a corresponding receiving device is a network device. For the D2D signal transmission, a sending device is a terminal device, and a corresponding receiving device is also a terminal device. A signal transmission direction is not limited in embodiments of this application.

Communication between the network device and the terminal device and communication between terminal devices may be performed by using a licensed spectrum (licensed spectrum), an unlicensed spectrum (unlicensed spectrum), or both a licensed spectrum and an unlicensed spectrum. The communication between the network device and the terminal device and the communication between the terminal devices may use a spectrum below 6 gigahertz (gigahertz, GHz), a spectrum above 6 GHz, or both the spectrum below 6 GHz and the spectrum above 6 GHz. A spectrum resource used between the network device and the terminal device is not limited in embodiments of this application.

In a wireless communication network, for example, in a mobile communication network, services supported by the network are increasingly diversified, and therefore need to satisfy increasingly diversified requirements. For example, the network needs to support an ultrahigh rate, ultra-low latency, and/or massive connections. This feature makes network planning, network configuration, and/or resource scheduling increasingly complex. In addition, because the network has increasingly powerful functions, for example, supports an increasingly high spectrum and supports new technologies such as a higher-order multiple-input multiple-output (multiple-input multiple-output, MIMO), beamforming, and/or beam management, network energy saving becomes a hot research topic. These new requirements, scenarios, and features bring unprecedented challenges to network planning, operation and maintenance, and efficient operation. To address the challenges, an artificial intelligence technology may be introduced into the wireless communication network to implement network intelligence.

Artificial intelligence (artificial intelligence, AI) is a technology proposed in the 1950s, to simulate human brain for complex computing. With improvement of data storage and computing capabilities, the AI technology is increasingly used. The 3rd generation partnership project (3rd generation partnership project, 3GPP) Release R17 approves a study item (study item, SI) proposing application of AI to new radio (new radio, NR), to improve network performance and user experience through intelligent data collection and analysis.

To support the AI technology in a wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server in an over the top (over the top, OTT) system. The AI node may communicate with another device in the communication system. For example, the another device may be one or more of the following: a network device, a terminal device, or a network element of a core network.

It may be understood that a quantity of AI nodes is not limited in this application. For example, when there are a plurality of AI nodes, the plurality of AI nodes may be divided based on functions. For example, different AI nodes are responsible for different functions.

It may be further understood that the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application. For example, the AI node may be an AI network element or an AI module.

FIG. 2 is a diagram of a framework of application of an AI technology in NR according to this application.

Based on discussion in the 3GPP RAN3 working group, a framework of application of AI in NR is preliminarily defined, as shown in FIG. 2. A data collection module 210 stores data input from a gNB, such as a gNB-central unit (central unit, CU), a gNB-distributed unit (distributed unit, DU), a UE, or another management entity, to serve as a database for AI model training and data analysis and inference. A model training module 220 may provide an optimal AI model by analyzing training data provided by the data collection module 210. A model inference module 230 provides, by using the AI model based on the data provided by the data collection module 210, AI-based appropriate prediction for network operation or guides a network to perform policy adjustment. Adjustment of a related policy is uniformly planned by an actor (actor) entity 240, and an adjusted policy is sent to a plurality of network entities for operation. In addition, after the related policy is applied, specific performance of the network is input into the data collection module 210 again for storage.

Currently, 3GPP has designed several basic application scenarios for application of AI on a RAN side based on working groups such as RAN3 and RAN 1. RAN3 includes scenarios such as network energy saving, load balancing, and mobility optimization. The following briefly describes the scenarios.

In the network energy saving (network energy saving) scenario, millions of base stations are being deployed to satisfy a requirement of a 5G network for key performance and a requirement brought by unprecedented growth of mobile users. The rapid growth has brought problems such as high energy consumption, carbon dioxide emission, and operating expense (operating expense, OPEX). Therefore, energy saving is an important use case, which may involve running of different layers and different mechanisms of the network on different time scales.

Cell activation/deactivation is a space domain energy saving solution, which is used to reduce overall energy consumption of a RAN through hierarchical traffic steering. When an expected traffic volume is lower than a fixed threshold, a cell may be shut down and served users may be steered to a new target cell. Efficient energy saving may alternatively be implemented in another manner, such as reducing load, modifying coverage, or performing other RAN configuration adjustment. An optimal energy saving decision depends on many factors, including load statuses of different RAN nodes, a RAN node capability, a key performance indicator (key performance indicator, KPI)/quality of service (quality of service, QoS) requirement, a quantity of active users, UE mobility, cell utilization, and the like.

However, determining actions aimed at improving energy efficiency is not a negligible task. Incorrect cell shutdown may severely affect network performance because remaining active cells need to provide services for additional traffic. An incorrect traffic offloading operation may result in a decrease, rather than an increase, in energy efficiency. A current energy saving plan is vulnerable to the following potential problems: 1. Inaccurate cell load prediction. Currently, an energy saving decision depends on current traffic load, without considering future traffic load. 2. Objective conflict between system performance and energy efficiency. Maximizing a key performance indicator of a system is usually at the expense of energy efficiency. Similarly, a most energy-efficient solution may affect system performance. Therefore, it is necessary to balance and manage trade-off between the two. 3. Adjustment of common energy saving-related parameters. Energy saving-related parameters are set by using a conventional operation, for example, set based on different cell load thresholds of power-on and shutdown of a cell. This is a rigid mechanism to some extent because it is difficult to set a proper threshold. 4. Action that may lead to local (for example, only a single RAN node) improvement in energy efficiency, while causing overall (for example, involving a plurality of RAN nodes) deterioration in energy efficiency.

To address the foregoing problems, a machine learning (machine learning, ML) technology and data collected in a RAN network may be used to optimize an energy saving decision. An ML algorithm can be used to predict energy efficiency and a load status in a next periodicity, which can be used to better determine to activate/deactivate a cell to save energy. Based on predicted load, the system can dynamically configure energy saving policies, for example, timing disabling, a granularity, and an offloading action, to balance system performance and energy efficiency and reduce energy consumption.

In the load balancing (load balancing) scenario, rapid growth of traffic in a commercial network and use of a plurality of bands make it difficult to guide traffic in a balanced distribution. To resolve this problem, load balancing is proposed. A purpose of load balancing is to evenly distribute load between cells and between cell areas, transfer some traffic from a congested cell or a cell-congested area, or steer users from one cell, cell area, carrier, or standard, to improve network performance. This can be implemented by optimizing cell reselection/handover parameters (such as handover thresholds) and handover actions. Such automated optimization can provide high-quality user experience while increasing a system capacity and minimizing manual intervention on network management and an optimization task.

However, optimization of load balancing is not an easy task. Currently, a load balancing decision based on a current/past cell load status is insufficient. Network traffic load and resource statuses change rapidly, especially in scenarios with high mobility and a large quantity of connections. This may cause ping-pong handover between different cells, cell overload, and degraded quality of service. In addition, load balancing makes it difficult to ensure overall network and service performance. For load balancing, a UE in a congested cell may be steered to a target cell through a handover procedure or a handover configuration adaptation. For example, if a UE with time-varying traffic load is steered to the target cell, the target cell may be overloaded by a new large traffic volume. It is difficult to determine whether service performance after the offloading action reaches an expected target.

To resolve the foregoing problems, a solution based on an AI/ML model can be introduced to improve load balancing performance. Based on various types of measurement and feedback and collection such as historical data performed by a user and a network node, the solution based on the AI/ML model and load prediction can improve the load balancing performance, provide higher-quality user experience, and increase the system capacity.

In the mobility optimization (mobility optimization) scenario, mobility management is a solution that ensures service continuity during mobility by minimizing call drops, radio link failures (radio link failures, RLFs), unnecessary handovers, and ping-pong effects. For a future high-frequency network, as coverage of a single node decreases, a frequency of the UE handing over between nodes becomes very high, especially for a high-mobility UE. In addition, for an application that has a strict requirement on QoS such as reliability and latency, quality of experience (quality of experience, QoE) is sensitive to handover performance. Therefore, mobility management needs to avoid a handover failure and reduce latency in a handover process. However, for a conventional method, achieving a near-zero-failure handover is challenging with a trial-and-error solution. The handover failure is a main cause of packet loss or additional latency during mobility, which is unexpected for an application that cannot tolerate packet loss and has low latency. In addition, effectiveness of feedback-based adjustment may be weak due to randomness and uncertainty of a transmission environment. In addition to baseline mobility, mobility optimization further includes dual connectivity, a conditional handover (conditional handover, CHO), and a dual active protocol stack handover (dual active protocol stack handover, DAPS HO), each requiring additional processing in mobility optimization.

Mobility aspects of a self-organized network (self-organized network, SON) that can be enhanced through AI/ML include the following aspects.
1. Reduce a possibility that mobility-related incidents occur.

### Examples of such incidents include:

Excessively late intra-system handover: An RLF occurs after a UE stays in a cell for a long time; and the UE attempts to reestablish a radio link connection in a different cell.

Excessively early intra-system handover: An RLF occurs shortly after a successful handover from a source cell to a target cell, or a handover failure occurs during a handover; and the UE attempts to reestablish a radio link connection in the source cell.

Intra-system handover to a wrong cell: An RLF occurs shortly after a successful handover from a source cell to a target cell, or a handover failure occurs during a handover; and the UE attempts to reestablish a radio link connection in a cell other than the source cell and the target cell.

Successful handover: There are potential problems during the successful handover.

RAN AI can observe a plurality of handover (handover, HO) events with related parameters, train its ML model by using the information, and attempt to identify a parameter set that contributes to the successful handover and a parameter set that causes an unexpected event.

2. UE location/mobility/performance prediction.

UE location prediction is a key part of mobility optimization, because many mobility-related radio resource management (radio resource management, RRM) actions (for example, selecting a handover target cell) can benefit from a predicted UE location/moving path. UE mobility prediction is also a key factor in optimizing data forwarding at an early stage, especially for a CHO. When a UE is served by some cells, UE performance prediction is a key factor in determining which cell is an optimal mobility target for maximizing efficiency and performance.

### 3. Traffic steering (traffic steering)

A handover trigger point is adjusted, to select an optimal combination of a primary cell (primary cell, PCell)/primary secondary cell (primary secondary cell, PSCell)/secondary cell (secondary cell, SCell) to serve a user, so that efficient resource processing can be implemented. Information related to mobility or dual connectivity is provided for a RAN node, so that existing traffic steering can be improved.

For example, before initiating a handover, a source gNB may use UE performance feedback collected for a past successful handover, or may receive feedback from a neighboring gNB. Similarly, in a case of dual connectivity, an eNB may successfully complete an SN addition or SN modification procedure by using past information (feedback) received from the gNB before addition of a secondary gNB or changing of a secondary node (secondary node, SN) is triggered.

In an example of two reports, a source RAN node of a mobility event or a RAN node serving as a primary node, such as an evolved NodeB (evolved NodeB, eNB) of a new radio-dual connectivity (EUTRA-NR dual connectivity, EN-DC) or a gNB of an NR-dual connectivity (dual connectivity, DC), may use feedback received from another RAN node as input into an AI/ML function supporting a traffic-related decision, for example, selecting a target cell in a case of mobility and selecting a PSCell/SCell in another case, to optimize a future decision.

A current protocol supports two manners of recording UE movement history: An NG-RAN node records UE history information (UE History Information, UHI) of a UE in an RRC connected mode, and the UE records UE paths (UE History Information from UE IE) in all RRC modes.

A UHI information element (information element, IE) is directly recorded by the NG-RAN node and then stored. Recorded content includes a cell identity, a cell type, camping duration, and a handover cause.

The UHI recorded by the UE (UHI from UE) IE is recorded by the UE and then stored. Availability of the UHI from UE is indicated to the NG-RAN node through UE capability reporting. The NG-RAN node then requests the UHI from UE from the UE. Content recorded in the UHI from UE includes: the cell identity and the camping duration. A maximum quantity of recorded cells is 16.

The existing protocol does not support a transmission mechanism for user equipment (user equipment, UE) path prediction information and feedback information of the UE across NG-RAN nodes. Currently, an AI-based application scenario (network energy saving, load balancing, and mobility optimization) considered in RAN3 relates to UE path prediction. In the RAN3 120 meeting, it is specified that in Release R18, a RAN side performs transmission of UE path prediction information and feedback information of the UE of a single NG-RAN node, that is, UE path prediction and feedback across NG-RAN nodes are not involved. For example, a gNB 1 predicts that the UE next passes through a gNB 2 and a gNB 3, and the gNB 2 has no AI capability to predict a UE path. In this case, an existing mechanism can only support the gNB 1 in sending a UE path of the UE in the gNB 2 to the gNB 2 in advance, to optimize a handover resource of the UE. However, the gNB 3 cannot obtain path prediction information of the UE in the gNB 3 in advance. In addition, the existing protocol can only support a source base station in receiving feedback information of the UE in a next-hop NG-RAN node, that is, the existing protocol only supports the gNB 1 in receiving feedback information of the UE from the gNB 2, but does not support the gNB 1 in receiving feedback information of the UE from the gNB 3.

Therefore, for a scenario in which the next-hop NG-RAN node has no AI capability or computing power is insufficient to predict the UE path, a UE path prediction information transmission and feedback collection mechanism across the NG-RAN nodes needs to be introduced. In embodiments of this application, in an existing standard, the UE path prediction information transmission mechanism across the NG-RAN nodes is introduced, so that the UE path prediction information can be transmitted across gNBs, to prepare for the UE to hand over to another gNB. In addition, the transmission mechanism for the feedback information of the UE across the NG-RAN nodes is introduced, so that the gNB can collect the feedback information of the UE across gNBs, thereby optimizing an AI model of the gNB, and improving AI service precision.

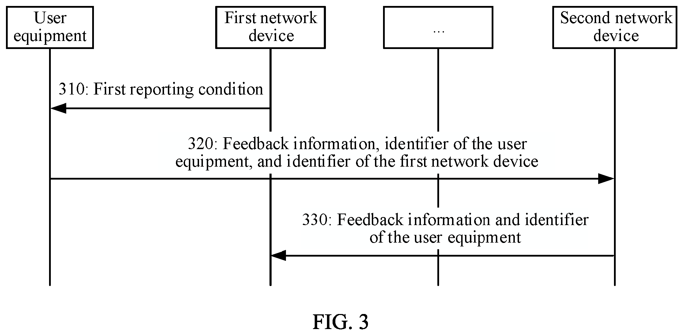

FIG. 3 is a schematic flowchart of a communication method according to an embodiment of this application.

310: A UE receives a first reporting condition sent by a first network device.

The first reporting condition includes an identifier of the first network device and an identifier of the user equipment, and the first reporting condition indicates a condition for reporting user equipment history information (UE history information, UHI) of the user equipment to the first network device.

It should be understood that the first network device has an AI prediction capability, and can predict a moving path of the UE in a second network device. At least one intermediate device may be included between the first network device and the second network device. In a possible implementation, the second network device may alternatively be a next-hop network device of the first network device.

In some possible application scenarios, the user equipment history information (UE history information, UHI) may also be referred to as UE historical moving path information or UE historical path information. A specific name is not limited in this application.

320: The UE sends feedback information of the user equipment, the identifier of the user equipment, and the identifier of the first network device to the second network device.

The feedback information of the user equipment includes UHI that satisfies the first reporting condition.

In a possible implementation, the UE starts to monitor and record the UHI by default after receiving the first reporting condition. Each time the UE hands over to a new network device, the UE sends the feedback information of the user equipment, the identifier of the user equipment, and the identifier of the first network device to the network device. The network device sends the feedback information of the user equipment and the identifier of the user equipment to the first network device based on the identifier of the first network device. The first network device optimizes a local AI model based on the feedback information.

In a possible implementation, the UE starts to monitor and record the UHI by default after receiving the first reporting condition, and sends the feedback information to the second network device after a preset end condition is satisfied. The preset end condition may be any one or more of the following: a UHI inter-network device quantity, a quantity of cells recorded in the UHI, UHI recording duration, a last cell ID, and a last network device ID.

Optionally, the first reporting condition may further include a feedback start condition, which indicates a start/trigger condition for the UE to record the feedback information of the UE. Optionally, the first reporting condition may further include a feedback termination condition, which indicates a termination/end condition for the UE to record the feedback information of the UE.

330: The second network device sends the feedback information of the user equipment and the identifier of the user equipment to the first network device.

The second network device may forward the feedback information of the user equipment and the identifier of the user equipment to the first network device based on the identifier of the first network device, to implement a UE path feedback information transmission mechanism across network devices.

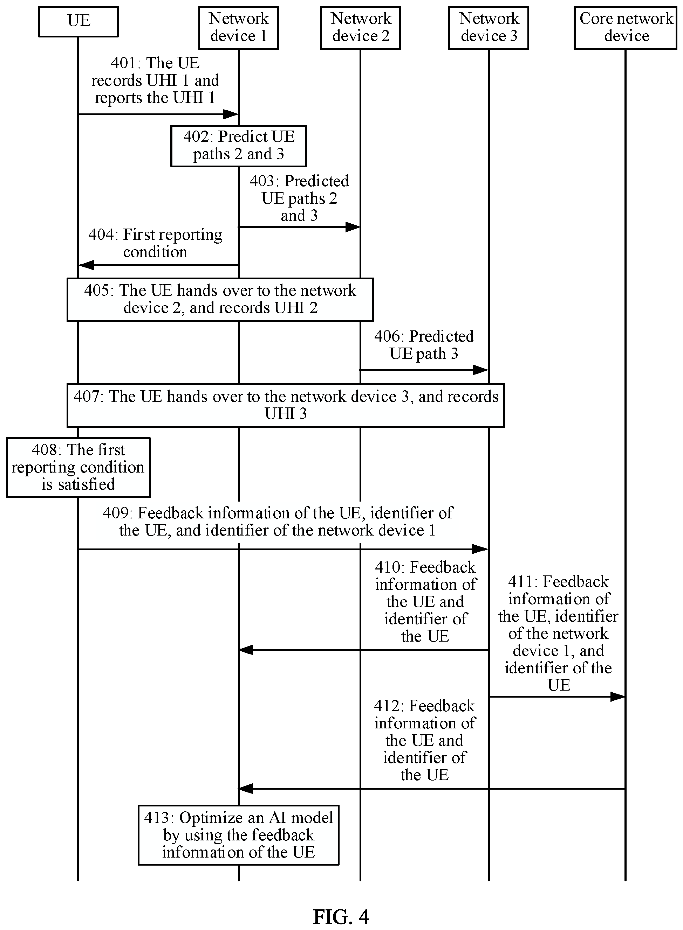

FIG. 4 is a schematic flowchart of another communication method according to an embodiment of this application.

In a possible implementation, in this embodiment of this application, UHI recorded by a UE is used as feedback information of a UE. A quantity of network devices is not limited in this embodiment. The following procedure is described by using two to-be-fed-back network devices (a network device 2 and a network device 3) as an example. A network device 1 is a sender of UE path prediction information. The network device 2 and the network device 3 receive the UE path prediction information and provide UE path feedback for the network device 1. In this embodiment of this application, the network device 1 indicates a UHI feedback reporting condition to the UE, and after the condition is satisfied, the UE indicates the network device 2 and/or the network device 3 to return the feedback information of the UE.

401: The UE records UHI 1 and reports the UHI 1 to the network device 1.

The UE camps on the network device 1, that is, the UE establishes a connection to and communicates with the network device 1. The UE records the historical path information UHI 1 of the network device 1 and reports the historical path information UHI 1 to the network device 1.

402: The network device 1 predicts UE paths 2 and 3.

The network device 1 predicts the UE paths based on an AI model. The UE path prediction information may be cross-site. For example, the UE path prediction information includes cell identities and camping duration of the UE in the network device 2 and the network device 3. In this embodiment of this application, the UE paths 2 and 3 represent path prediction information that is predicted by the network device 1 and that is of the UE in the network device 2 and the network device 3. It should be understood that, in this embodiment of this application, two to-be-fed-back network devices are merely used as an example. If other to-be-fed-back network devices such as a network device 4 and a network device 5 are further included, the network device 1 may also predict paths of the UE in the network device 4 and the network device 5 based on the AI model.

A specific AI model used by the network device 1 is not limited in this application, for example, may be a neural network model, a linear regression model, a logistic regression model, a decision tree model, a random forest model, or a support vector machine model.

403: The network device 1 sends the UE prediction paths 2 and 3 to the network device 2.

The network device 1 sends the UE path prediction information in step 402 to the network device 2, to prepare for the UE to hand over to the network device 2. Optionally, this step may further include an identity (identity document, ID) of a UHI feedback condition. For descriptions of the ID of the UHI feedback condition, refer to step 404.

Optionally, the network device 1 may alternatively send the UE path prediction information in step 402 to the network device 3, to prepare for the UE to hand over to the network device 3.

404: The network device 1 sends a first reporting condition to the UE.

The network device 1 sends the first reporting condition to the UE, to indicate when to receive which segment of UHI. The first reporting condition may include an identifier of a feedback network device and an identifier of the UE. The identifier of the feedback network device indicates an identifier of a network device that returns the feedback information of the UE, namely, an identifier of the sender of the UE path prediction information, and may be an identifier of the network device 1. The identifier of the UE identifies a UE that needs to monitor UHI feedback reporting.

Optionally, the first reporting condition may further include a feedback start condition, which indicates a start/trigger condition for the UE to record the feedback information of the UE, or may be a cell identity, that is, the UE starts to record the UHI from the cell, or may be time information, that is, the UE starts to record the UHI from the time. If the first reporting condition does not carry the feedback start condition, the UE starts to monitor and record the UHI by default after receiving the first reporting condition sent by the network device 1 to the UE.

Optionally, the first reporting condition may further include a feedback termination condition, which indicates a termination/end condition for the UE to record the feedback information of the UE, or may be any one or more of the following: a UHI inter-network device quantity, a quantity of cells recorded in the UHI, UHI recording duration, a last cell ID, and a last network device ID. The UHI inter-network device quantity indicates that the UE reports the feedback information of the UE in step 409 after recording to the quantity of network devices; the quantity of cells recorded in the UHI indicates that the UE reports the feedback information of the UE in step 409 after recording to the quantity of cells; the UHI recording duration indicates that the UE reports the feedback information of the UE in step 409 after recording to the duration; the last cell ID indicates that the UE reports the feedback information of the UE in step 409 after recording to the cell; and the end network device ID indicates that the UE reports the feedback information of the UE in step 409 after recording to the network device.

If the first reporting condition does not carry a UHI feedback termination condition, it may be considered by default that the feedback termination condition is satisfied after the UE records to actual UE path information corresponding to the UE path prediction information. In this solution, the network device 1 may send the UE path prediction information to the UE in advance, so that the UE determines the feedback termination condition. For example, the network device 1 may send the UE path prediction information to the UE when sending the first reporting condition to the UE.

Optionally, the feedback start condition and the feedback termination condition may be configured for the UE in advance, and do not need to be sent by the network device 1 to the UE.

Optionally, the first reporting condition may further include a first reporting condition ID, because the network device 2 may subsequently indicate, based on the first reporting condition ID, that step 404 of the UE is invalid.

405: The UE hands over to the network device 2, and records UHI 2.

The network device 2 optimizes a handover resource based on the UE path prediction information received in step 403. The UE hands over to the network device 2, and records the historical path UHI 2 of the UE in the network device 2. The network device 1 stores a UE context, where the UE context includes at least the identifier of the UE.

406: The network device 2 sends the predicted UE path 3 to the network device 3.

In this embodiment of this application, the UE path 3 represents the path prediction information that is predicted by the network device 1 and that is of the UE in the network device 3.

In a possible implementation, if the network device 2 has no AI prediction capability, or computing power of the network device 2 is insufficient to support AI inference in a high-speed movement scenario, the network device 2 may send, to the network device 3, the path prediction information that is received in step 403 and that is of the UE in the network device 3, to optimize the UE handover resource, and subsequent step 407 to step 413 are performed.

In another possible implementation, if the network device 2 may predict path information of the UE in the network device 3 before the UE hands over to the network device 3, it may be considered that the path information that is predicted by the network device 2 and that is of the UE in the network device 3 is more accurate than path information that is predicted by the network device 1 and that is of the UE in the network device 3, and subsequent step 407 to step 413 may not be performed. The network device 2 does not use the path information that is received in step 403 and that is of the UE in the network device 3, and the network device 2 sends actual path information of the UE in the network device 2 to the network device 1. The network device 2 or the network device 1 may indicate, to the UE based on the first reporting condition ID, that step 404 is invalid, that is, after receiving an invalid indication of step 404, the UE no longer monitors the UHI feedback reporting.

In another possible implementation, if the network device 2 may predict path information of the UE in the network device 3 before the UE hands over to the network device 3, the network device 2 may alternatively send the path information that is predicted by the network device 2 and that is of the UE in the network device 3 to the network device 3, and subsequent step 407 to step 413 continue to be performed.

It should be understood that, regardless of whether the network device 2 has the AI prediction capability, if the UE satisfies the first reporting condition in the network device 2, the network device 2 may send the actual path information of the UE in the network device 2 to the network device 1, and step 406 to step 413 are not performed.

407: The UE hands over to the network device 3, and records UHI 3.

The UE hands over to the network device 3, and records the historical path UHI 3 of the UE in the network device 3.

408 and 409: When detecting that the UHI satisfies the first reporting condition, the UE sends UE path feedback information, an identifier of the network device 1, and the identifier of the UE to the network device 3.

In a possible implementation, when the UE detects that the UHI satisfies the first reporting condition, the UE actively sends, to the network device 3, the UHI recorded by the UE and a second reporting condition. The second reporting condition indicates how the network device 3 obtains the feedback information of the UE from the UHI through filtering. The second reporting condition may be consistent with the first reporting condition in step 404, or may be a subset of the first reporting condition, and includes at least the identifier of the network device 1 and the identifier of the UE. The identifier of the UE indicates, to the network device 3, a UE that sends step 409, because the network device 3 may receive step 409 sent by a plurality of UEs.

In another possible implementation, when the UE detects that the UHI satisfies the first reporting condition, the UE actively sends the feedback information of the UE, the identifier of the network device 1, and the identifier of the UE to the network device 3. The feedback information of the UE is obtained, based on the first reporting condition, by the UE through filtering from the UHI recorded by the UE. For example, if the first reporting condition indicates that the feedback start condition is the cell ID 1, and the feedback termination condition is five cells, the feedback information of the UE is UE historical path information of the five cells starting from the cell 1. The identifier of the network device 1 indicates a network device to which the network device 3 sends step 410.

410: The network device 3 sends the feedback information of the UE and the identifier of the UE to the network device 1.

In step 410, for a scenario in which there is an XN interface between the network device 3 and the network device 1, the network device 3 obtains the feedback information of the UE, the identifier of the UE, and the identifier of the network device 1 based on step 409, and sends the feedback information of the UE and the identifier of the UE to the network device 1.

For the feedback information of the UE, refer to the descriptions in step 408 and step 409. The feedback information of the UE may further include UE prediction information, to associate feedback information with prediction information. If the feedback information of the UE includes the UE prediction information, the network device 2 further needs to include, in step 406, the path information that is predicted by the network device 1 and that is of the UE in the network device 2, that is, the UE path prediction information included in step 406 is consistent with the UE path prediction information included in step 403.

411 and 412: The network device 3 forwards the feedback information of the UE and the identifier of the UE to the network device 1 through a core network device.

For a scenario in which there is no XN interface between the network device 3 and the network device 1, the network device 3 may forward the feedback information of the UE and the identifier of the UE to the network device 1 through the core network device, for example, a 5G core network (5G core network, 5GC) device. The network device 3 sends, to the 5GC device, the feedback information of the UE, the identifier of the network device 1, and the identifier of the UE that are obtained in step 409. If there is an NG interface between the 5GC device and the network device 1, the feedback information of the UE and the identifier of the UE are sent to the network device 1. If there is no NG interface between the 5GC device and the network device 1, a forwarding failure indication and a cause thereof are sent to the network device 3. The cause may be that there is no NG interface between the 5GC device and the network device 1. Steps 411 and 412 may further include an identifier of the network device 3, which indicates, to the network device 1, a network device that sends the feedback information of the UE.

413: The network device 1 optimizes the AI model by using the feedback information of the UE.

The network device 1 may optimize, evaluate, update, or train, based on the received feedback information of the UE and the identifier of the UE, a local AI model used to generate the UE path prediction information.

The UE path prediction information and the feedback information of the UE in this embodiment of this application may alternatively be sent to a device other than the network device 1 (a device that generates the prediction information) as AI training data. For example, the UE path prediction information and the feedback information of the UE may be sent to a device 6 as a training dataset of the AI model in the device 6, to improve precision of a local AI model of the device 6. For example, the device 6 may be a 5GC device or a network operations, administration and maintenance function (operations, administration and maintenance, OAM) entity.

In a possible implementation, the first reporting condition may include a reporting device identifier, which indicates to send the UE path prediction information and the feedback information of the UE to a target device. For example, if the reporting device identifier included in the first reporting condition is the device 6, the UE path prediction information and the feedback information of the UE are sent to the device 6. In a possible implementation, the first reporting condition may include a plurality of reporting device identifiers, which indicate to send the UE path prediction information and the feedback information of the UE to a plurality of target devices. For example, if the reporting device identifiers included in the first reporting condition are the device 6 and a device 7, the UE path prediction information and the feedback information of the UE are respectively sent to the device 6 and the device 7. Alternatively, the device 6 or the device 7 may be the network device 1 in this embodiment of this application.

Similarly, the identifier of the network device 1 in the first reporting condition may be a 5GC identifier, an OAM identifier, an operator identifier, a traffic control entity (traffic control entity, TCE) identifier, or the like. The identifier of the network device 1 used in the foregoing embodiment should not be understood as a limitation on this application.

According to the communication method provided in this embodiment of this application, the network device 1 may indicate the first reporting condition to the UE, so that the network device 1 can obtain feedback information of the UE that is sent by at least one to-be-fed-back network device, thereby optimizing the AI model of the network device 1 and improving AI service precision.

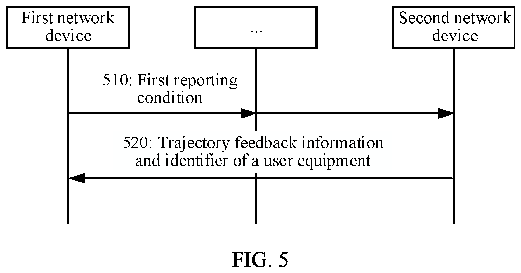

FIG. 5 is a schematic flowchart of another communication method according to an embodiment of this application.

510: A first network device sends a first reporting condition to a second network device.

It should be understood that the first network device may directly send the first reporting condition to the second network device, or may indirectly send the first reporting condition to the second network device through forwarding by another device. The second network device may directly receive the first reporting condition sent by the first network device, or may receive the first reporting condition that is sent by the first network device and that is forwarded by the another network device.

The first reporting condition includes an identifier of the first network device and an identifier of a user equipment, and the first reporting condition indicates a condition for reporting UHI of the user equipment to the first network device.

520: The first network device receives feedback information of the user equipment and the identifier of the user equipment that are sent by the second network device.

If there is an XN interface between the first network device and the second network device, the second network device may directly send the feedback information and the identifier of the user equipment to the first network device. XN is a point-to-point interface between two NG-RAN nodes. If there is no XN interface between the first network device and the second network device, the second network device may forward the feedback information and the identifier of the user equipment to the first network device through a core network device. Optionally, if there is no XN interface between the first network device and the second network device, the second network device may alternatively forward an identifier of the second network device to the first network device through the core network device, to indicate, to the first network device, a network device that sends the feedback information.

Optionally, similar to the first network device sending the first reporting condition to indicate a condition for reporting the UHI of the user equipment to the first network device, the first network device may send a third reporting condition to indicate a condition for reporting performance feedback information of the user equipment to the first network device. It should be understood that, in this embodiment of this application, the first network device sends UE path prediction information and receives actual UE path feedback information, to optimize a local path prediction AI model. Alternatively, the first network device may send UE performance prediction information and receive actual UE performance feedback information, to optimize a local performance prediction AI model. For example, the UE performance prediction information and the UE performance feedback information may include information such as a UE throughput, a UE packet loss rate, and a UE packet error rate.

In a possible implementation scenario, when sending the UE path prediction information, the first network device may also send the UE performance prediction information, and receive the actual UE path feedback information and the actual UE performance feedback information, to separately optimize the local path prediction AI model and the local performance prediction AI model.

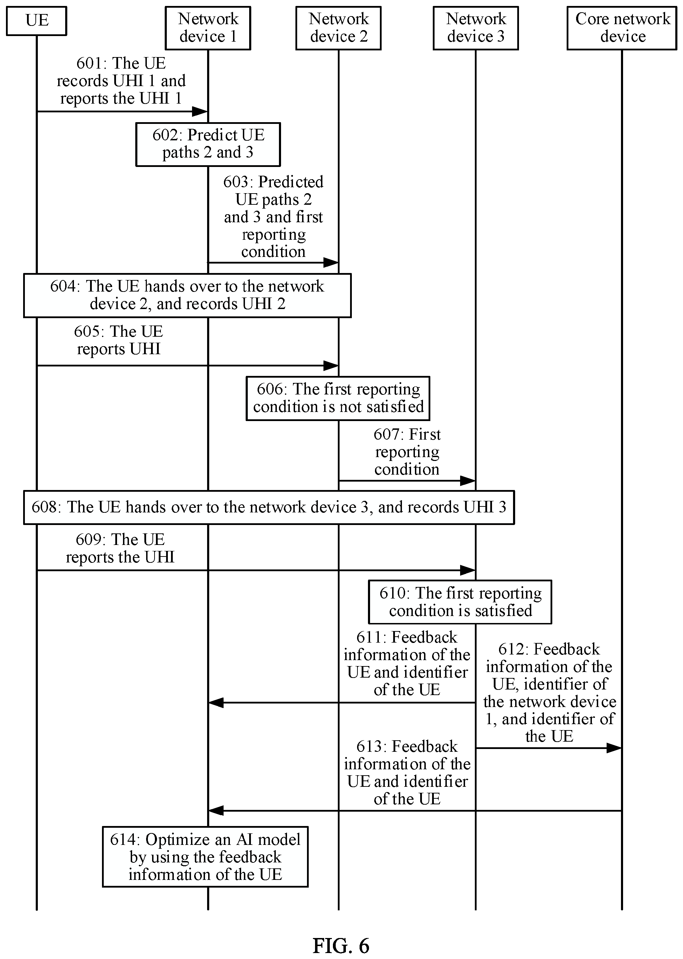

FIG. 6 is a schematic flowchart of another communication method according to an embodiment of this application.

In a possible implementation, in this embodiment of this application, UHI recorded by a UE is used as feedback information of the UE. A quantity of network devices is not limited in this embodiment. The following procedure is described by using two to-be-fed-back network devices (a network device 2 and a network device 3) as an example. A network device 1 is a sender of UE path prediction information. The network device 2 and the network device 3 receive the UE path prediction information and provide UE path feedback for the network device 1. In this embodiment of this application, the network device 1 indicates a UHI feedback reporting condition to a next-hop network device (the network device 2), and after the condition is satisfied, the network device 2 or the network device 3 returns the feedback information of the UE.

601: The UE records UHI 1 and reports the UHI 1 to the network device 1.

The UE camps on the network device 1, that is, the UE establishes a connection to and communicates with the network device 1. The UE records the historical path information UHI 1 of the network device 1 and reports the historical path information UHI 1 to the network device 1.

602: The network device 1 predicts UE paths 2 and 3.

The network device 1 predicts the UE paths based on an AI model. The UE path prediction information may be cross-site. For example, the UE path prediction information includes cell identities and camping duration of the UE in the network device 2 and the network device 3. It should be understood that, in this embodiment of this application, two to-be-fed-back network devices are merely used as an example. If other to-be-fed-back network devices such as a network device 4 and a network device 5 are further included, the network device 1 may also predict paths of the UE in the network device 4 and the network device 5 based on the AI model.

A specific AI model used by the network device 1 is not limited in this application, for example, may be a neural network model, a linear regression model, a logistic regression model, a decision tree model, a random forest model, or a support vector machine model.

603: The network device 1 sends the UE prediction paths 2 and 3 and a first reporting condition to the network device 2.

The network device 1 sends the UE path prediction information in step 602 to the network device 2, to prepare for the UE to hand over to the network device 2. The network device 1 also sends the first reporting condition to the network device 2, to indicate when to receive which segment of UHI. The first reporting condition may include an identifier of the network device 1 and an identifier of the UE. The identifier of the network device 1 indicates an identifier of a network device that returns the feedback information of the UE, namely, an identifier of the sender of the UE path prediction information. The identifier of the UE identifies a UE that needs to monitor UHI feedback reporting.

Optionally, the network device 1 may alternatively send the UE path prediction information in step 602 to the network device 3, to prepare for the UE to hand over to the network device 3.

Optionally, the first reporting condition may further include a feedback start condition, which indicates a start/trigger condition for filtering on the feedback information of the UE, and may be a cell identity, that is, filtering is performed on the UHI recorded by the UE from the cell, or may be time information, that is, filtering is performed on the UHI recorded by the UE from the time. If the first reporting condition does not carry a UHI feedback start condition, it is considered by default that the feedback start condition is satisfied when the UE hands over to the to-be-fed-back network device, for example, the network device 2 or the network device 3.

Optionally, the first reporting condition may further include a feedback termination condition, which indicates a termination/end condition for filtering on the feedback information of the UE, or may be any one or more of the following: a UHI inter-network device quantity, a quantity of cells recorded in the UHI, UHI recording duration, a last cell ID, and a last network device ID. The UHI inter-network device quantity indicates that a UE path starting from the start condition to the UE recording to the quantity of network devices is used as the feedback information of the UE; the quantity of cells recorded in the UHI indicates that a UE path starting from the start condition to the UE recording to the quantity of cells is used as the feedback information of the UE; the UHI recording duration indicates that a UE path starting from the start condition to the UE recording to the duration is used as the feedback information of the UE; the last cell ID indicates that a UE path starting from the start condition to the UE recording to the cell is used as the feedback information of the UE; and the end network device ID indicates that a UE path starting from the start condition to the UE recording to the network device is used as the feedback information of the UE.

If the first reporting condition does not carry a feedback termination condition, it may be considered by default that the feedback termination condition is satisfied after the UE records to actual UE path information corresponding to the UE path prediction information.

Optionally, the feedback start condition and the feedback termination condition may be configured for the to-be-fed-back network device in advance, and do not need to be sent by the network device 1 to the network device 2.

604: The UE hands over to the network device 2, and records UHI 2.

The network device 2 optimizes a handover resource based on the UE path prediction information received in step 603. The UE hands over to the network device 2, and records the historical path UHI 2 of the UE in the network device 2. The network device 1 stores a UE context, where the UE context includes at least the identifier of the UE.

605 and 606: The UE sends historical path UHI of the UE to the network device 2.

In a possible implementation, if the network device 2 has an AI prediction capability and/or computing power to predict the UE path, that is, if the network device 2 may predict path information of the UE in the network device 3 before the UE hands over to the network device 3, it may be considered that the path information that is predicted by the network device 2 and that is of the UE in the network device 3 is more accurate than path information that is predicted by the network device 1 and that is of the UE in the network device 3, and subsequent step 607 to step 614 may not be performed. The network device 2 does not use the path information that is received in step 603 and that is of the UE in the network device 3, and the network device 2 sends actual path information of the UE in the network device 2 to the network device 1.

In another possible implementation, if the network device 2 has no AI prediction capability, or computing power of the network device 2 is insufficient to support AI inference in a high-speed movement scenario, and it is detected that UE historical path information does not satisfy the first reporting condition, subsequent step 607 to step 614 are performed.

In another possible implementation, if the network device 2 may predict path information of the UE in the network device 3 before the UE hands over to the network device 3, the network device 2 may alternatively send the path information that is predicted by the network device 2 and that is of the UE in the network device 3 to the network device 3, and subsequent step 607 to step 614 continue to be performed.

It should be understood that, regardless of whether the network device 2 has the AI prediction capability, if the historical path information of the UE in the network device 2 satisfies the first reporting condition, the network device 2 sends the actual path information of the UE in the network device 2 to the network device 1, and step 607 to step 614 are not performed.

607: The network device 2 sends the first reporting condition to the network device 3.

The network device 2 may further send, to the network device 3, path prediction information that is received in step 603 and that is of the UE in the network device 3, to optimize a UE handover resource.

In another possible implementation, the network device 1 may alternatively directly send the path information that is obtained through prediction and that is of the UE in the network device 3 to the network device 3.

608: The UE hands over to the network device 3, and records historical path UHI 3 of the UE in the network device 3.

609: The UE sends the historical path UHI of the UE to the network device 3.

610: When the network device 3 detects that UHI reported by the UE satisfies the first reporting condition, the network device 3 obtains the feedback information of the UE, the identifier of the network device 1, and the identifier of the UE based on the UHI and the first reporting condition. The feedback information of the UE is obtained, based on the first reporting condition, by the network device 3 through filtering from the UHI reported by the UE. For example, if the first reporting condition indicates that the feedback start condition is a cell ID 1, and the feedback termination condition is five cells, the feedback information of the UE is UE historical path information of the five cells starting from the cell 1 in the UHI reported by the UE. The identifier of the network device 1 in the first reporting condition indicates a network device to which the network device 3 sends step 611.

611: The network device 3 sends the UE path feedback and the identifier of the UE to the network device 1.

In step 611, for a scenario in which there is an XN interface between the network device 3 and the network device 1, the network device 3 obtains the feedback information of the UE, the identifier of the UE, and the identifier of the network device 1 based on step 610, and sends the feedback information of the UE and the identifier of the UE to the network device 1.

For the feedback information of the UE, refer to the descriptions in step 610. The feedback information of the UE may further include UE prediction information, to associate feedback information with prediction information. If the feedback information of the UE includes the UE prediction information, the network device 2 further needs to include, in step 607, the path information that is predicted by the network device 1 and that is of the UE in the network device 2, that is, the UE path prediction information included in step 607 is consistent with the UE path prediction information included in step 603.

612 and 613: The network device 3 forwards the feedback information of the UE and the identifier of the UE to the network device 1 through a core network device.

For a scenario in which there is no XN interface between the network device 3 and the network device 1, the network device 3 may forward the feedback information of the UE and the identifier of the UE to the network device 1 through the core network device, for example, a 5G core network (5G core network, 5GC) device. The network device 3 sends, to the 5GC device, the feedback information of the UE, the identifier of the network device 1, and the identifier of the UE that are obtained. If there is an NG interface between the 5GC device and the network device 1, the feedback information of the UE and the identifier of the UE are sent to the network device 1. If there is no NG interface between the 5GC device and the network device 1, a forwarding failure indication and a cause thereof are sent to the network device 3. The cause may be that there is no NG interface between the 5GC device and the network device 1. The foregoing step 612 and step 613 may further include an identifier of the network device 3, which indicates, to the network device 1, a network device that sends the feedback information of the UE.

614: The network device 1 optimizes the AI model by using the feedback information of the UE.

The network device 1 may optimize, evaluate, update, or train, based on the received feedback information of the UE and the identifier of the UE, a local AI model used to generate the UE path prediction information.

The UE path prediction information and the feedback information of the UE in this embodiment of this application may alternatively be sent to a device other than the network device 1 (a device that generates the prediction information) as AI training data. For example, the UE path prediction information and the feedback information of the UE may be sent to a device 6 as a training dataset of the AI model in the device 6, to improve precision of a local AI model of the device 6. For example, the device 6 may be a 5GC or a network operations, administration and maintenance function (operations, administration and maintenance, OAM) entity.

In a possible implementation, the first reporting condition may include a reporting device identifier, which indicates to send the UE path prediction information and the feedback information of the UE to a target device. For example, if the reporting device identifier included in the first reporting condition is the device 6, the UE path prediction information and the feedback information of the UE are sent to the device 6. In a possible implementation, the first reporting condition may include a plurality of reporting device identifiers, which indicate to send the UE path prediction information and the feedback information of the UE to a plurality of target devices. For example, if the reporting device identifiers included in the first reporting condition are the device 6 and a device 7, the UE path prediction information and the feedback information of the UE are respectively sent to the device 6 and the device 7. Alternatively, the device 6 or the device 7 may be the network device 1 in this embodiment of this application.

Similarly, the identifier of the network device 1 in the first reporting condition may be a 5GC identifier, an OAM identifier, an operator identifier, a traffic control entity (traffic control entity, TCE) identifier, or the like. The identifier of the network device 1 used in the foregoing embodiment should not be understood as a limitation on this application.

According to the communication method provided in this embodiment of this application, the network device 1 may indicate the first reporting condition to the next-hop network device, so that the network device 1 can obtain feedback information of the UE that is sent by at least one to-be-fed-back network device, thereby optimizing the AI model of the network device 1 and improving AI service precision.

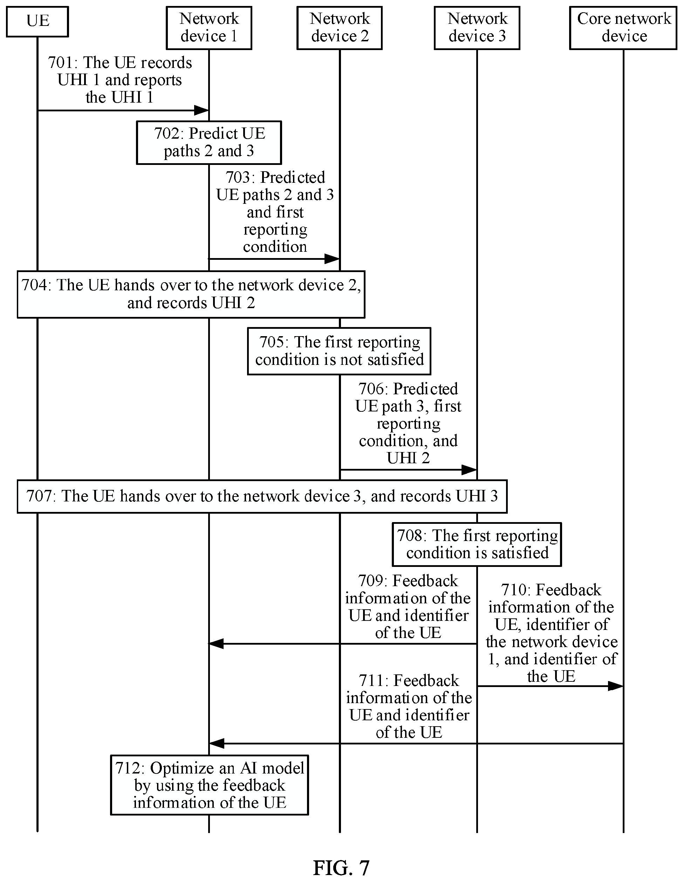

FIG. 7 is a schematic flowchart of another communication method according to an embodiment of this application.

In a possible implementation, in this embodiment of this application, UHI recorded by a network device is used as feedback information of a UE. A quantity of network devices is not limited in this embodiment. The following procedure is described by using two to-be-fed-back network devices (a network device 2 and a network device 3) as an example. A network device 1 is a sender of UE path prediction information. The network device 2 and the network device 3 receive the UE path prediction information and provide UE path feedback for the network device 1. In this embodiment of this application, the network device 1 indicates a UHI feedback reporting condition to a next-hop network device (the network device 2), and after the condition is satisfied, the network device 2 or the network device 3 returns the feedback information of the UE.

701: The UE records UHI 1 and reports the UHI 1 to the network device 1.

The UE camps on the network device 1, that is, the UE establishes a connection to and communicates with the network device 1. The UE records the historical path information UHI 1 of the network device 1 and reports the historical path information UHI 1 to the network device 1.

702: The network device 1 predicts UE paths 2 and 3.

The network device 1 predicts the UE paths based on an AI model. The UE path prediction information may be cross-site. For example, the UE path prediction information includes cell identities and camping duration of the UE in the network device 2 and the network device 3. It should be understood that, in this embodiment of this application, two to-be-fed-back network devices are merely used as an example. If other to-be-fed-back network devices such as a network device 4 and a network device 5 are further included, the network device 1 may also predict paths of the UE in the network device 4 and the network device 5 based on the AI model.

A specific AI model used by the network device 1 is not limited in this application, for example, may be a neural network model, a linear regression model, a logistic regression model, a decision tree model, a random forest model, or a support vector machine model.

703: The network device 1 sends the UE prediction paths 2 and 3 and a first reporting condition to the network device 2.

The network device 1 sends the UE path prediction information in step 702 to the network device 2, to prepare for the UE to hand over to the network device 2. The network device 1 also sends the first reporting condition to the network device 2, to indicate to obtain which segment of UHI through filtering. The first reporting condition may include an identifier of the network device 1 and an identifier of the UE. The identifier of the network device 1 indicates an identifier of a network device that returns the feedback information of the UE, namely, an identifier of the sender of the UE path prediction information. The identifier of the UE identifies a UE that needs to monitor UHI feedback reporting.

Optionally, the first reporting condition may further include a feedback start condition, which indicates a start/trigger condition for filtering on the feedback information of the UE, and may be a cell identity, that is, filtering is performed on the UHI recorded by the network device from the cell, or may be time information, that is, filtering is performed on the UHI recorded by the network device from the time. If the first reporting condition does not carry a UHI feedback start condition, it is considered by default that the feedback start condition is satisfied when the UE hands over to the to-be-fed-back network device, for example, the network device 2 or the network device 3.

Optionally, the first reporting condition may further include a feedback termination condition, which indicates a termination/end condition for filtering on the feedback information of the UE, or may be any one or more of the following: a UHI inter-network device quantity, a quantity of cells recorded in the UHI, UHI recording duration, a last cell ID, and a last network device ID. The UHI inter-network device quantity indicates that a UE path starting from the start condition to the network device recording to the quantity of network devices is used as the feedback information of the UE; the quantity of cells recorded in the UHI indicates that a UE path starting from the start condition to the network device recording to the quantity of cells is used as the feedback information of the UE; the UHI recording duration indicates that a UE path starting from the start condition to the network device recording to the duration is used as the feedback information of the UE; the last cell ID indicates that a UE path starting from the start condition to the network device recording to the cell is used as the feedback information of the UE; and the end network device ID indicates that a UE path starting from the start condition to the network device recording to the network device is used as the feedback information of the UE.

If the first reporting condition does not carry the feedback termination condition, it is considered by default that the feedback termination condition is satisfied after the network device records to actual UE path information corresponding to the UE path prediction information.

Optionally, the feedback start condition and the feedback termination condition may be configured for the to-be-fed-back network device in advance, and do not need to be sent by the network device 1 to the network device 2.

704: The UE hands over to the network device 2, and the network device 2 records historical path information UHI 2 of the UE in the network device 2.

The network device 2 optimizes a handover resource based on the UE path prediction information received in step 703. The UE hands over to the network device 2, and records the historical path UHI 2 of the UE in the network device 2. The network device 1 stores a UE context, where the UE context includes at least the identifier of the UE.

In a possible implementation, if the network device 2 has an AI prediction capability and/or computing power to predict the UE path, that is, if the network device 2 may predict path information of the UE in the network device 3 before the UE hands over to the network device 3, it may be considered that the path information that is predicted by the network device 2 and that is of the UE in the network device 3 is more accurate than path information that is predicted by the network device 1 and that is of the UE in the network device 3, and subsequent step 705 to step 712 may not be performed. The network device 2 does not use the path information that is received in step 703 and that is of the UE in the network device 3, and the network device 2 sends actual path information of the UE in the network device 2 to the network device 1.

In another possible implementation, if the network device 2 has no AI prediction capability, or computing power of the network device 2 is insufficient to support AI inference in a high-speed movement scenario, and it is detected that the first reporting condition is not satisfied, subsequent step 705 to step 712 are performed.

In another possible implementation, if the network device 2 may predict path information of the UE in the network device 3 before the UE hands over to the network device 3, the network device 2 may send the path information that is predicted by the network device 2 and that is of the UE in the network device 3 to the network device 3, and subsequent step 705 to step 712 continue to be performed.

It should be understood that, regardless of whether the network device 2 has the AI prediction capability, if the historical path information of the UE in the network device 2 satisfies the first reporting condition, the network device 2 sends the feedback information of the UE to the network device 1, and step 705 to step 712 are not performed.

705 and 706: If the first reporting condition is not satisfied, the network device 2 sends the path prediction information of the UE in the network device 3, the first reporting condition, and UHI 2 to the network device 3.

The network device 2 may send, to the network device 3, the path prediction information that is received in step 703 and that is of the UE in the network device 3, to optimize a UE handover resource. In a possible implementation, the network device 1 may directly send the path information that is obtained through prediction and that is of the UE in the network device 3 to the network device 3.

The network device 2 also sends the first reporting condition to the network device 3. In a possible implementation, the network device 1 may also directly send the first reporting condition to the network device 3.

The network device 2 sends the UHI 2 to the network device 3 or the UHI 2 that is obtained by the network device 2 through filtering by using the first reporting condition and that is of the UE in the network device 2. Because a next-hop network device 3 records only historical path information UHI 3 of the UE in the network device 3, and does not include the UHI 2, the network device 2 needs to send the UHI 2 to the network device 3. In a possible implementation, the network device 2 may also send the UHI 2 or the UHI 2 obtained through filtering by using the first reporting condition to the network device 1, and the network device 3 uses the recorded UHI 3 as the feedback information of the UE.

707: The UE hands over to the network device 3, and the network device 3 records the historical path information UHI 3 of the UE in the network device 3.

708: When the network device 3 detects that the UHI recorded by the network device satisfies the first reporting condition, the network device 3 obtains the feedback information of the UE, an identifier of a feedback network device, and the identifier of the UE based on the UHI recorded by the network device and the first reporting condition. The UHI recorded by the network device may include the UHI 2 and the UHI 3. The feedback information of the UE is obtained, based on the first reporting condition, by the network device 3 through filtering from the UHI recorded by the network device. For example, if the first reporting condition indicates that the feedback start condition is a cell ID 1, and the feedback termination condition is five cells, the feedback information of the UE is UE historical path information of five cells starting from a cell 1. The identifier of the network device 1 in the first reporting condition indicates a network device to which the network device 3 sends step 709.

709: The network device 3 sends the feedback information of the UE and the identifier of the UE to the network device 1.

In step 709, for a scenario in which there is an XN interface between the network device 3 and the network device 1, the network device 3 obtains the feedback information of the UE, the identifier of the UE, and the identifier of the network device 1 based on step 708, and sends the feedback information of the UE and the identifier of the UE to the network device 1.

For the feedback information of the UE, refer to the descriptions in step 708. The feedback information of the UE may further include UE prediction information, to associate feedback information with prediction information. If the feedback information of the UE includes the UE prediction information, the network device 2 further needs to include, in step 706, the path information that is predicted by the network device 1 and that is of the UE in the network device 2, that is, the UE path prediction information included in step 706 is consistent with the UE path prediction information included in step 703.

710 and 711: The network device 3 forwards the feedback information of the UE and the identifier of the UE to the network device 1 through a core network device.

For a scenario in which there is no XN interface between the network device 3 and the network device 1, the network device 3 may forward the feedback information of the UE and the identifier of the UE to the network device 1 through the core network device, for example, a 5G core network (5G core network, 5GC) device. The network device 3 sends, to the 5GC device, the feedback information of the UE, the identifier of the network device 1, and the identifier of the UE that are obtained. If there is an NG interface between the 5GC device and the network device 1, the feedback information of the UE and the identifier of the UE are sent to the network device 1. If there is no NG interface between the 5GC device and the network device 1, a forwarding failure indication and a cause thereof are sent to the network device 3. The cause may be that there is no NG interface between the 5GC device and the network device 1. The foregoing step 710 and step 711 may further include an identifier of the network device 3, which indicates, to the network device 1, a network device that sends the feedback information of the UE.

712: The network device 1 optimizes the AI model by using the feedback information of the UE.

The network device 1 may optimize, evaluate, update, or train, based on the received feedback information of the UE, a local AI model used to generate the UE path prediction information.

According to the communication method provided in this embodiment of this application, the network device 1 may indicate the first reporting condition to the next-hop network device, so that the network device 1 can obtain feedback information of the UE that is sent by at least one to-be-fed-back network device, thereby optimizing the AI model of the network device 1 and improving AI service precision.

Optionally, similar to a case in which the network device 1 sends UE path prediction information and receives actual UE path feedback information to optimize a local path prediction AI model, the network device 1 may also send UE performance prediction information and receive actual UE performance feedback information to optimize a local performance prediction AI model. For example, the UE performance prediction information and the UE performance feedback information may include information such as a UE throughput, a UE packet loss rate, and a UE packet error rate.

In a possible implementation scenario, when sending the UE path prediction information, the network device 1 may also send the UE performance prediction information, and receive the actual UE path feedback information and the actual UE performance feedback information, to separately optimize the local path prediction AI model and the local performance prediction AI model.

It should be understood that, in embodiments of this application, names such as "the first network device", "the second network device", and "the network device 1" are merely examples of names for distinguishing different objects, and the specific names should not be understood as limitations on this application, provided that the communication method provided in this application can be performed.

The UE path prediction information and the feedback information of the UE in this embodiment of this application may alternatively be sent to a device other than the network device 1 (a device that generates the prediction information) as AI training data. For example, the UE path prediction information and the feedback information of the UE may be sent to a device 6 as a training dataset of the AI model in the device 6, to improve precision of a local AI model of the device 6. For example, the device 6 may be the 5GC or a network operations, administration and maintenance function (operations, administration and maintenance, OAM) entity.

In a possible implementation, the first reporting condition may include a reporting device identifier, which indicates to send the UE path prediction information and the feedback information of the UE to a target device. For example, if the reporting device identifier included in the first reporting condition is the device 6, the UE path prediction information and the feedback information of the UE are sent to the device 6. In a possible implementation, the first reporting condition may include a plurality of reporting device identifiers, which indicate to send the UE path prediction information and the feedback information of the UE to a plurality of target devices. For example, if the reporting device identifiers included in the first reporting condition are the device 6 and a device 7, the UE path prediction information and the feedback information of the UE are respectively sent to the device 6 and the device 7. Alternatively, the device 6 or the device 7 may be the network device 1 in this embodiment of this application.

Similarly, the identifier of the network device 1 in the first reporting condition may be a 5GC identifier, an OAM identifier, an operator identifier, a traffic control entity (traffic control entity, TCE) identifier, or the like. The identifier of the network device 1 used in the foregoing embodiment should not be understood as a limitation on this application.

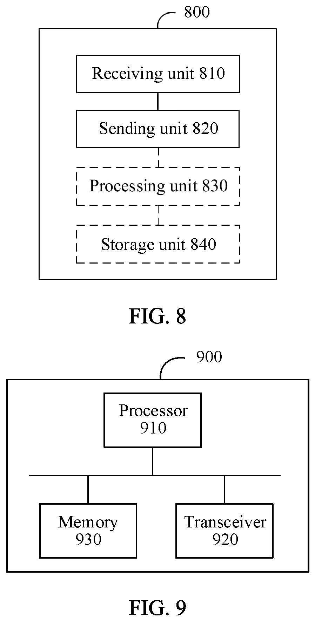

The foregoing describes the method provided in embodiments of this application. In the following, apparatuses provided in embodiments of this application are described in detail with reference to FIG. 8 and FIG. 9.

FIG. 8 is a block diagram of a communication apparatus according to an embodiment of this application. As shown in FIG. 8, the communication apparatus 800 may include a receiving unit 810 and a sending unit 820.

It should be understood that, the communication apparatus 800 may correspond to a user equipment or a network device in embodiments of this application. The network device includes a first network device, a second network device, a network device 1, a network device 2, or a network device 3 in the foregoing embodiments. As an example description, the communication apparatus 800 can implement some actions, steps, or methods in FIG. 3 to FIG. 7 in the foregoing method embodiments.

This application provides a communication apparatus, including: a receiving unit, configured to receive, within a service range of a first network device, a first reporting condition sent by the first network device, where the first reporting condition includes an identifier of the first network device and an identifier of a user equipment, and the first reporting condition indicates a condition for reporting user equipment history information UHI of the user equipment to the first network device; and a sending unit, configured to send feedback information of the user equipment, the identifier of the user equipment, and the identifier of the first network device to the second network device within a service range of a second network device, where the feedback information of the user equipment includes UHI that satisfies the first reporting condition.

Optionally, in some implementations, the first reporting condition further includes any one or more of the following: a feedback start condition, a feedback termination condition, and an identifier of the first reporting condition, the feedback start condition indicates a start condition for recording the feedback information, and the feedback termination condition indicates a termination condition for recording the feedback information.

Optionally, in some implementations, the feedback start condition includes any one or more of the following: a cell identity and start recording time.

Optionally, in some implementations, the feedback termination condition includes any one or more of the following: an inter-network device quantity, a quantity of recorded cells, recording duration, an identity of a last cell, and an identifier of a last network device.

Optionally, in some implementations, the sending unit is further configured to send first UHI and a second reporting condition to the second network device, where the first UHI includes the UHI recorded by the user equipment, the second reporting condition includes the identifier of the user equipment and the identifier of the first network device, the second reporting condition indicates a condition for reporting the UHI of the user equipment to the first network device, and the first UHI is used to obtain the feedback information through filtering based on the second reporting condition.

Optionally, in some implementations, the receiving unit is further configured to receive first path prediction information sent by the first network device, where the first path prediction information includes predicted path information of the user equipment in at least one network device.

Optionally, in some implementations, the feedback information is used to optimize an artificial intelligence AI model of the first network device.

Referring to a structure of the communication apparatus shown in FIG. 8, this application further provides a communication apparatus, including: a sending unit, configured to send a first reporting condition to a user equipment, where the first reporting condition includes an identifier of a first network device and an identifier of the user equipment, and the first reporting condition indicates a condition for reporting UHI of the user equipment to the first network device; and a receiving unit, configured to receive feedback information of the user equipment and the identifier of the user equipment that are sent by the second network device, where the feedback information of the user equipment includes UHI that satisfies the first reporting condition.

Optionally, in some implementations, the communication apparatus further includes a processing unit 830, configured to optimize an artificial intelligence AI model of the first network device based on the feedback information of the user equipment and the identifier of the user equipment.

Optionally, in some implementations, the sending unit is further configured to send second path prediction information of the user equipment to the second network device, where the second path prediction information includes predicted path information of the user equipment in the second network device.

Optionally, in some implementations, the receiving unit is further configured to receive the feedback information of the user equipment and the identifier of the user equipment that have been sent by the second network device and forwarded by a core network device.

Optionally, in some implementations, the receiving unit is further configured to receive an identifier of the second network device that has been sent by the second network device and that is forwarded by the core network device.

Optionally, in some implementations, the first reporting condition further includes any one or more of the following: a feedback start condition, a feedback termination condition, and an identifier of the first reporting condition, the feedback start condition indicates a start condition for recording the feedback information, and the feedback termination condition indicates a termination condition for recording the feedback information.

Optionally, in some implementations, the feedback start condition includes any one or more of the following: a cell identity and start recording time.

Optionally, in some implementations, the feedback termination condition includes any one or more of the following: an inter-network device quantity, a quantity of recorded cells, recording duration, an identity of a last cell, and an identifier of a last network device.

Optionally, in some implementations, the sending unit is further configured to send first path prediction information of the user equipment to the user equipment, where the first path prediction information includes predicted path information of the user equipment in at least one network device.

Referring to a structure of the communication apparatus shown in FIG. 8, this application further provides a communication apparatus, including: a receiving unit, configured to receive feedback information of a user equipment, an identifier of the user equipment, and an identifier of a first network device that are sent by the user equipment, where the feedback information of the user equipment includes UHI that satisfies a first reporting condition, and the first reporting condition indicates a condition for reporting the UHI to the first network device; and a sending unit, configured to send the feedback information and the identifier of the user equipment to the first network device.

Optionally, in some implementations, the receiving unit is further configured to receive first UHI and a second reporting condition that are sent by the user equipment, where the first UHI includes the UHI recorded by the user equipment, the second reporting condition includes the identifier of the user equipment and the identifier of the first network device, the second reporting condition indicates a condition for reporting the UHI of the user equipment to the first network device, and the first UHI is used to obtain the feedback information through filtering based on the second reporting condition.

Optionally, in some implementations, the second reporting condition further includes any one or more of the following: a feedback start condition and a feedback termination condition, the feedback start condition indicates a start condition for recording the feedback information, and the feedback termination condition indicates a termination condition for recording the feedback information.

Optionally, in some implementations, the feedback start condition includes any one or more of the following: a cell identity and start recording time.

Optionally, in some implementations, the feedback termination condition includes any one or more of the following: an inter-network device quantity, a quantity of recorded cells, recording duration, an identity of a last cell, and an identifier of a last network device.

Optionally, in some implementations, the sending unit is further configured to send the feedback information and the identifier of the user equipment to a core network device, where the core network device is configured to forward the feedback information and the identifier of the user equipment to the first network device.

Optionally, in some implementations, the sending unit is further configured to send an identifier of the second network device to the core network device, where the core network device is configured to forward the identifier of the second network device to the first network device.

Optionally, in some implementations, the receiving unit is further configured to receive second path prediction information sent by the first network device, where the second path prediction information includes predicted path information of the user equipment in the second network device.

Referring to a structure of the communication apparatus shown in FIG. 8, this application further provides a communication apparatus, including: a receiving unit, configured to receive a first reporting condition sent by a first network device, where the first reporting condition includes an identifier of the first network device and an identifier of a user equipment, and the first reporting condition indicates a condition for reporting UHI of the user equipment to the first network device; and a sending unit, configured to send feedback information of the user equipment and the identifier of the user equipment to the first network device, where the feedback information of the user equipment includes UHI that satisfies the first reporting condition.

Optionally, in some implementations, the first reporting condition further includes any one or more of the following: a feedback start condition and a feedback termination condition, the feedback start condition indicates a start condition for recording the feedback information, and the feedback termination condition indicates a termination condition for recording the feedback information.

Optionally, in some implementations, the feedback start condition includes any one or more of the following: a cell identity and start recording time.

Optionally, in some implementations, the feedback termination condition includes any one or more of the following: an inter-network device quantity, a quantity of recorded cells, recording duration, an identity of a last cell, and an identifier of a last network device.

Optionally, in some implementations, the receiving unit is further configured to receive first UHI, where the first UHI includes the UHI recorded by the user equipment; and obtain the feedback information from the first UHI through filtering based on the first reporting condition.

Optionally, in some implementations, the receiving unit is further configured to receive second UHI, where the second UHI includes UHI recorded by at least one network device; and obtain the feedback information from third UHI and the second UHI through filtering based on the first reporting condition, where the third UHI is UHI recorded by the second network device.

Optionally, in some implementations, the sending unit is further configured to send the feedback information and the identifier of the user equipment to a core network device, where the core network device is configured to forward the feedback information and the identifier of the user equipment to the first network device.

Optionally, in some implementations, the sending unit is further configured to send an identifier of the second network device to the core network device, where the core network device is configured to forward the identifier of the second network device to the first network device.

Optionally, in some implementations, the receiving unit is further configured to receive second path prediction information sent by the first network device, where the second path prediction information includes predicted path information of the user equipment in the second network device.

Referring to a structure of the communication apparatus shown in FIG. 8, this application further provides a communication apparatus, including: a sending unit, configured to send a first reporting condition to a second network device, where the first reporting condition includes an identifier of a first network device and an identifier of a user equipment, and the first reporting condition indicates a condition for reporting UHI of the user equipment to the first network device; and a receiving unit, configured to receive feedback information of the user equipment and the identifier of the user equipment that are sent by the second network device, where the feedback information of the user equipment includes UHI that satisfies the first reporting condition.

Optionally, in some implementations, the communication apparatus further includes a processing unit 830, configured to optimize an artificial intelligence AI model of the first network device based on the feedback information of the user equipment and the identifier of the user equipment.

Optionally, in some implementations, the sending unit is further configured to send second path prediction information of the user equipment to the second network device, where the second path prediction information includes predicted path information of the user equipment in the second network device.

Optionally, in some implementations, the receiving unit is further configured to receive the feedback information of the user equipment and the identifier of the user equipment that have been sent by the second network device and forwarded by a core network device.

Optionally, in some implementations, the receiving unit is further configured to receive an identifier of the second network device that has been sent by the second network device and that is forwarded by the core network device.

Optionally, in some implementations, the first reporting condition further includes any one or more of the following: a feedback start condition and a feedback termination condition, the feedback start condition indicates a start condition for recording the feedback information, and the feedback termination condition indicates a termination condition for recording the feedback information.

Optionally, in some implementations, the feedback start condition includes any one or more of the following: a cell identity and start recording time.

Optionally, in some implementations, the feedback termination condition includes any one or more of the following: an inter-network device quantity, a quantity of recorded cells, recording duration, an identity of a last cell, and an identifier of a last network device.

It should be understood that, when the communication apparatus 800 is a chip, the chip may include a sending unit, a receiving unit, and a processing unit. The transceiver unit may be an input/output circuit or a communication interface. The processing unit may be a processor, a microprocessor, or an integrated circuit that is integrated on the chip.

The sending unit 810 and the receiving unit 820 are configured to implement a signal receiving and sending operation of the communication apparatus 800, and the processing unit 830 is configured to implement a signal processing operation of the communication apparatus 800. Optionally, the communication apparatus 800 may further include a storage unit 840, and the storage unit 840 is configured to store instructions.

FIG. 9 is a block diagram of a communication device according to an embodiment of this application. As shown in the figure, the communication device 900 includes at least one processor 910, and may further include a transceiver 920. Optionally, the communication device 900 further includes a memory 930, configured to store instructions. The processor 910 is coupled to the memory 930, and is configured to execute the instructions stored in the memory 930, to control the transceiver 920 to send a signal and/or receive a signal.

It should be understood that, the processor 910 and the memory 930 may be combined into one processing apparatus, and the processor 910 is configured to execute program code stored in the memory 930 to implement the foregoing functions. During specific implementation, the memory 930 may alternatively be integrated in the processor 910, or may be independent of the processor 910.

It should be further understood that, the transceiver 920 may include a receiver (or referred to as a receiving machine) and a transmitter (or referred to as a transmitting machine). The transceiver 920 may further include an antenna. There may be one or more antennas. The transceiver 920 may alternatively be a communication interface or an interface circuit.

When the communication device 900 is a chip, the chip includes a transceiver unit and a processing unit. The transceiver unit may be an input/output circuit or a communication interface. The processing unit may be a processor, a microprocessor, or an integrated circuit that is integrated on the chip. An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system-on-chip (system-on-chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

An embodiment of this application further provides a computer-readable storage medium. The computer-readable storage medium stores computer instructions used to implement the method performed by a user equipment in the foregoing method embodiments.

For example, when a computer program is executed by a computer, the computer is enabled to implement the method performed by the user equipment in the foregoing method embodiments.

An embodiment of this application further provides a computer-readable storage medium. The computer-readable storage medium stores computer instructions used to implement the method performed by a first network device in the foregoing method embodiments.

For example, when a computer program is executed by a computer, the computer is enabled to implement the method performed by the first network device in the foregoing method embodiments.

An embodiment of this application further provides a computer-readable storage medium. The computer-readable storage medium stores computer instructions used to implement the method performed by a second network device in the foregoing method embodiments.

For example, when a computer program is executed by a computer, the computer is enabled to implement the method performed by the second network device in the foregoing method embodiments.

An embodiment of this application further provides a computer program product including instructions. When the instructions are executed by a computer, the computer is enabled to implement the method performed by a user equipment, a first network device, or a second network device in the foregoing method embodiments.

An embodiment of this application further provides a communication system. The communication system includes a user equipment, a first network device, and a second network device. The user equipment is configured to perform the steps of the method performed by the user equipment in the foregoing method embodiment, the first network device is configured to perform the steps of the method performed by the first network device in the foregoing method embodiment, and the second network device is configured to perform the steps of the method performed by the second network device in the foregoing method embodiment. Optionally, the communication system may further include another intermediate network device.

It can be clearly understood by a person skilled in the art that, for convenient and brief description, for explanations and beneficial effects of related content in any one of the communication apparatuses provided above, refer to the corresponding method embodiments provided above. Details are not described herein again.

A specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be executed by a user equipment, a first network device, or a second network device, or may be a functional module that is in the user equipment, the first network device, or the second network device and that can invoke and execute a program.

Various aspects or features of this application may be implemented as methods, apparatuses, or products using standard programming and/or engineering techniques. As used herein, the term "product" may encompass a computer program accessible from any computer-readable device, carrier, or medium.

The computer-readable storage medium may be any usable medium accessible by the computer, or a data storage device, for example, a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive), or a semiconductor medium (for example, a solid-state disk (solid-state disk, SSD), a USB flash drive, a read-only memory (read-only memory, ROM), or a random access memory (random access memory, RAM)).

The various storage media described herein may represent one or more devices and/or other machine-readable media for storing information. The term "machine-readable medium" may include, but is not limited to: radio channels and various other media capable of storing, containing, and/or carrying instructions and/or data.

It should be understood that, the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that, the memory described in this specification aims to include but is not limited to these memories and any memory of another proper type.

In the several embodiments provided in this application, it should be understood that the disclosed apparatus and method may be implemented in other manners. For example, the foregoing apparatus embodiments are only examples. For example, division into the foregoing units is only logical function division, and may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof.

When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. For the computer-readable storage medium, refer to the foregoing descriptions.

It should be understood that, in embodiments of this application, numbers "first", "second", and the like are merely used to distinguish between different objects, for example, to distinguish between different network devices, and constitute no limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should be understood that, in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or pre-configured.

It should be understood that, in this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between a source end and a destination end for sending of the information. However, the destination end may understand valid information from the source end. Similar descriptions in this application may be understood similarly, and details are not described herein.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, within a service range of a first network device, a first reporting condition sent by the first network device, wherein the first reporting condition comprises an identifier of the first network device and an identifier of a user equipment, and the first reporting condition indicates a condition for reporting user equipment history information UHI of the user equipment to the first network device; and
sending feedback information of the user equipment, the identifier of the user equipment, and the identifier of the first network device to a second network device within a service range of the second network device, wherein the feedback information of the user equipment comprises UHI that satisfies the first reporting condition.

2. The method according to claim 1, wherein the first reporting condition further comprises any one or more of the following: a feedback start condition, a feedback termination condition, and an identifier of the first reporting condition, the feedback start condition indicates a start condition for recording the feedback information, and the feedback termination condition indicates a termination condition for recording the feedback information.

3. The method according to claim 2, wherein the feedback start condition comprises any one or more of the following: a cell identity and start recording time.

4. The method according to claim 2 or 3, wherein the feedback termination condition comprises any one or more of the following: an inter-network device quantity, a quantity of recorded cells, recording duration, an identity of a last cell, and an identifier of a last network device.

5. The method according to any one of claims 1 to 4, wherein the sending the feedback information of the user equipment, the identifier of the user equipment, and the identifier of the first network device to the second network device comprises:
sending first UHI and a second reporting condition to the second network device, wherein the first UHI comprises the UHI recorded by the user equipment, the second reporting condition comprises the identifier of the user equipment and the identifier of the first network device, the second reporting condition indicates a condition for reporting the UHI of the user equipment to the first network device, and the first UHI is used to obtain the feedback information through filtering based on the second reporting condition.

6. The method according to any one of claims 1 to 5, wherein the method further comprises:
receiving first path prediction information sent by the first network device, wherein the first path prediction information comprises predicted path information of the user equipment in at least one network device.

7. The method according to any one of claims 1 to 6, wherein the feedback information is used to optimize an artificial intelligence AI model of the first network device.

8. A communication method, wherein the method comprises:
sending a first reporting condition to a user equipment, wherein the first reporting condition comprises an identifier of a first network device and an identifier of the user equipment, and the first reporting condition indicates a condition for reporting UHI of the user equipment to the first network device; and
receiving feedback information of the user equipment and the identifier of the user equipment that are sent by a second network device, wherein the feedback information of the user equipment comprises UHI that satisfies the first reporting condition.

9. The method according to claim 8, wherein the method further comprises:
optimizing an artificial intelligence AI model of the first network device based on the feedback information of the user equipment and the identifier of the user equipment.

10. The method according to claim 8 or 9, wherein the method further comprises:
sending second path prediction information of the user equipment to the second network device, wherein the second path prediction information comprises predicted path information of the user equipment in the second network device.

11. The method according to any one of claims 8 to 10, wherein the receiving the feedback information of the user equipment and the identifier of the user equipment that are sent by the second network device comprises:
receiving the feedback information of the user equipment and the identifier of the user equipment that have been sent by the second network device and forwarded by a core network device.

12. The method according to claim 11, wherein the method further comprises:
receiving an identifier of the second network device that has been sent by the second network device and that is forwarded by the core network device.

13. The method according to any one of claims 8 to 12, wherein the first reporting condition further comprises any one or more of the following: a feedback start condition, a feedback termination condition, and an identifier of the first reporting condition, the feedback start condition indicates a start condition for recording the feedback information, and the feedback termination condition indicates a termination condition for recording the feedback information.

14. The method according to claim 13, wherein the feedback start condition comprises any one or more of the following: a cell identity and start recording time.

15. The method according to claim 13 or 14, wherein the feedback termination condition comprises any one or more of the following: an inter-network device quantity, a quantity of recorded cells, recording duration, an identity of a last cell, and an identifier of a last network device.

16. The method according to any one of claims 8 to 15, wherein the method further comprises:
sending first path prediction information of the user equipment to the user equipment, wherein the first path prediction information comprises predicted path information of the user equipment in at least one network device.

17. A communication method, wherein the method comprises:
receiving feedback information of a user equipment, an identifier of the user equipment, and an identifier of a first network device that are sent by the user equipment, wherein the feedback information of the user equipment comprises UHI that satisfies a first reporting condition, and the first reporting condition indicates a condition for reporting the UHI to the first network device; and
sending the feedback information and the identifier of the user equipment to the first network device.

18. The method according to claim 17, wherein the receiving the feedback information of the user equipment, the identifier of the user equipment, and the identifier of the first network device that are sent by the user equipment comprises:
receiving first UHI and a second reporting condition that are sent by the user equipment, wherein the first UHI comprises UHI recorded by the user equipment, the second reporting condition comprises the identifier of the user equipment and the identifier of the first network device, the second reporting condition indicates a condition for reporting the UHI of the user equipment to the first network device, and the first UHI is used to obtain the feedback information through filtering based on the second reporting condition.

19. The method according to claim 18, wherein the second reporting condition further comprises any one or more of the following: a feedback start condition and a feedback termination condition, the feedback start condition indicates a start condition for recording the feedback information, and the feedback termination condition indicates a termination condition for recording the feedback information.

20. The method according to claim 19, wherein the feedback start condition comprises any one or more of the following: a cell identity and start recording time.

21. The method according to claim 19 or 20, wherein the feedback termination condition comprises any one or more of the following: an inter-network device quantity, a quantity of recorded cells, recording duration, an identity of a last cell, and an identifier of a last network device.

22. The method according to any one of claims 17 to 21, wherein the sending the feedback information and the identifier of the user equipment to the first network device comprises:
sending the feedback information and the identifier of the user equipment to a core network device, wherein the core network device is configured to forward the feedback information and the identifier of the user equipment to the first network device.

23. The method according to claim 22, wherein the method further comprises:
sending an identifier of the second network device to the core network device, wherein the core network device is configured to forward the identifier of the second network device to the first network device.

24. The method according to any one of claims 17 to 23, wherein the method further comprises:
receiving second path prediction information sent by the first network device, wherein the second path prediction information comprises predicted path information of the user equipment in the second network device.

25. A communication apparatus, comprising a module or a unit configured to perform the method according to any one of claims 1 to 7, or comprising a module or a unit configured to perform the method according to any one of claims 8 to 16, or comprising a module or a unit configured to perform the method according to any one of claims 17 to 24.

26. A communication apparatus, wherein the apparatus comprises a processor, the processor is coupled to a memory, and the memory stores instructions; and when the instructions are run by the processor, the processor is enabled to perform the method according to any one of claims 1 to 24.

27. A communication system, comprising a user equipment, a first network device, and/or a second network device, wherein the user equipment is configured to perform the method according to any one of claims 1 to 7, the first network device is configured to perform the method according to any one of claims 8 to 16, and the second network device is configured to perform the method according to any one of claims 17 to 24.

28. A computer-readable storage medium, storing a computer program or instructions, wherein the computer program or the instructions are used to implement the method according to any one of claims 1 to 24.

29. A chip, comprising a processor and an interface, configured to invoke, from a memory, a computer program stored in the memory and run the computer program, to perform the method according to any one of claims 1 to 24.
